(19) Europäisches Patentamt
European Patent Office
Office européen des brevets

(11) **EP 3 790 318 B1**

(12) **FASCICULE DE BREVET EUROPEEN**

(45) Date de publication et mention de la délivrance du brevet:
**24.05.2023   Bulletin 2023/21**

(21) Numéro de dépôt: **20193173.0**

(22) Date de dépôt: **27.08.2020**

(51) Classification Internationale des Brevets (IPC):
**H04W 36/08** *(2009.01)*      **H04W 88/02** *(2009.01)*

(52) Classification Coopérative des Brevets (CPC):
**H04W 36/08; H04W 88/02**

(54) **PROCÉDÉ DE TRANSFERTS INTERCELLULAIRES**

INTERZELLULÄRES HANDOVERVERFAHREN

METHOD FOR INTERCELLULAR HANDOVERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.09.2019   FR 1909662**

(43) Date de publication de la demande:
**10.03.2021   Bulletin 2021/10**

(73) Titulaire: **THALES**
**92400 Courbevoie (FR)**

(72) Inventeurs:
- **PANAITOPOL, Dorin**
  **92622 GENNEVILLIERS CEDEX (FR)**
- **PIPON, François**
  **92622 GENNEVILLIERS CEDEX (FR)**
- **VIJAYANDRAN, Luxmiram**
  **92622 GENNEVILLIERS CEDEX (FR)**
- **HAZIZA, Nathalie**
  **92622 GENNEVILLIERS CEDEX (FR)**
- **PAINCHAULT, Rémi**
  **92130 ISSY LES MOULINEAUX (FR)**

(74) Mandataire: **Atout PI Laplace**
**Immeuble "Visium"**
**22, avenue Aristide Briand**
**94117 Arcueil Cedex (FR)**

(56) Documents cités:
**EP-A1- 3 352 506        US-A1- 2015 036 663**
**US-A1- 2019 230 568**

- **AHAMED MD MARUF ET AL: "Path loss slope based cell selection and handover in heterogeneous networks", 2015 IEEE INTERNATIONAL CONFERENCE ON ELECTRO/INFORMATION TECHNOLOGY (EIT), IEEE, 21 mai 2015 (2015-05-21), pages 499-504, XP032790400, DOI: 10.1109/EIT.2015.7293389 [extrait le 2015-10-06]**
- **TEXAS INSTRUMENTS: "UE measurements in support of Handover and UL Power Control in E-UTRA", 3GPP DRAFT; R1-070745, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. St. Louis, USA; 20070206, 6 février 2007 (2007-02-06), XP050104775,**
- **"3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 15)", 3GPP STANDARD; TECHNICAL SPECIFICATION; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.6.0, 29 juin 2019 (2019-06-29), pages 1-365, XP051754468,**

**Description**

L'invention concerne un procédé et un système permettant de gérer le transfert intercellulaire dans un système de communication LTE (Long Term Evolution) et/ou 5G Nouvelle Radio (NR ou New Radio) avec un modèle de canal spécifique (double ou triple-trajet) ou pour des situations où les antennes présentent des lobes secondaires importants.

Elle s'applique notamment dans le domaine des trains à grande vitesse, des avions avec des communications air-sol génératrices d'un modèle à double trajet (ou avec deux trajets), par exemple, pour des plateformes équipées avec des dispositifs de relayage LTE ou 5G NR, potentiellement des hélicoptères, des avions, des aéronefs avec ou sans pilotes, des plateformes en haute altitude (HAPS ou « High Altitude Platform Station », déployées à très haute altitude, par exemple dans la stratosphère), des ballons dirigeables, ou pour des systèmes satellitaires (systèmes de type « non-terrestrial networks » ou NTN), etc. Par exemple les systèmes HAPS évoluent au-dessus de l'altitude de croisière des avions de ligne (10 km) mais très en-deçà de l'espace, où se trouvent les satellites (orbites basses de 300 à 2 000 km et satellites géostationnaires à 36 000 km).

Un utilisateur mobile LTE placé à bord d'un avion doit pouvoir communiquer avec des stations de base LTE situées au sol. Ces dernières contrôlent la communication et fournissent un moyen de connexion au coeur de réseau LTE. Le transfert de flux de données entre les passagers et une station au sol est assuré au moyen d'un réseau interne à l'avion, par exemple au moyen de la technologie WiFi ou tout autre moyen de communication connu d'un homme du métier.

Dans de tels systèmes de communication, un des problèmes techniques est l'existence périodique des effets de combinaison et de destruction des trajets rencontrés pour un canal de propagation avec deux trajets ou un canal air-sol. Dans ce cas, un utilisateur mobile va subir une dégradation périodique du signal reçu et comme effet il va se connecter et se déconnecter plusieurs fois à la même station de base (i.e., désignée eNB en LTE, gNB pour la 5G NR). Ceci conduit à une limitation dans la qualité de la communication, voire une dégradation, du fait de la présence d'une interruption entre deux connexions successives avec la même station de base. En plus, la limitation ou la dégradation dans la qualité de la communication peut produire un transfert intercellulaire (et potentiellement temporaire) avec une autre station de base. L'utilisateur mobile a donc besoin d'une méthode de connexion qui permet d'éviter la perte consécutive de la communication et la réinitialisation de la procédure d'accès initial avec une station de base au sol, qui ajoute un retard supplémentaire non-négligeable qui peut-être de l'ordre d'une centaine de millisecondes et même plus pour des vitesses supérieures à 500 km/h (avec des effets Doppler importants) car l'utilisateur mobile UE va perdre sa capacité à effectuer correctement la synchronisation dans une marge bien prédéfinie.

Un autre problème technique est représenté par la consommation d'énergie supplémentaire nécessaire pour la retransmission de données (à cause des effets de destruction des trajets, si les données transmises ou réceptionnées sont perdues à cause de l'atténuation temporaire du canal de propagation radio), et/ou par la consommation d'énergie supplémentaire pour transmettre des messages de contrôle (i.e. messages de non-acquittement *NACK*, d'acquittement *ACK*, des messages *RRC*, des rapports de mesure, etc.), et/ou par la consommation d'énergie supplémentaire pour la répétition de la procédure d'accès initial et/ou pour le transfert intercellulaire consécutif.

L'art antérieur décrit plusieurs solutions pour gérer les transferts intercellulaires connus sous le terme anglo-saxon « HandOver » (ou HO). La plupart des méthodes connues du demandeur sont basées sur une connaissance des rapports signals sur interférence plus bruit connus sous l'abréviation SINR (« Signal to Noise Interférence Ratio »). Les informations de valeurs des rapports SINR (ou éventuellement et tout simplement de puissance reçue) sont utilisées par la station de base (i.e., eNB en LTE, gNB pour la 5G NR) et non au niveau d'un utilisateur mobile. Plus précisément, le mobile effectue les mesures de SINR qui sont transférées au niveau de la station de base de desserte et la station de base de desserte effectue le HandOver vers une station de base voisine (cible) si la valeur du SINR provenant de la station de base voisine est plus importante.

La figure 1 illustre la position d'un utilisateur mobile UE lors du passage d'une première cellule/station de base de desserte 1 vers une cellule/station de base voisine 2.

La figure 2 illustre un organigramme d'une solution de HandOver mise en oeuvre par l'art antérieur.

La première étape 21 est une étape d'initialisation. Lors d'une deuxième étape 22, l'utilisateur mobile va effectuer une mesure de puissance du signal $S_{bm}$ émis par la station de base de desserte et reçu par l'utilisateur mobile et une mesure de puissance du signal $S_{vm}$ émis par une station de base voisine et reçu par l'utilisateur mobile. Néanmoins, l'utilisateur mobile peut mesurer en parallèle plusieurs stations de bases voisines correspondant à une liste d'identifiants cellulaires envoyée par la station de base de desserte. Les valeurs de puissance mesurées sont ensuite comparées, afin de décider, lors d'une troisième étape 23, si la condition d'entrée pour changer de cellule servie par la station de base de desserte vers une cellule servie par une station de base voisine est vérifiée. Si la condition d'entrée n'est pas vérifiée 23a, alors le procédé retourne à l'étape d'initialisation. Si la condition d'entrée est vérifiée 23b, alors lors d'une quatrième étape 24, on va initialiser un démarrage « start timer », *t=0*, puis l'utilisateur mobile va faire une deuxième mesure de puissance, cinquième étape 25, pour chacun des signaux. Lors d'une sixième étape 26, l'utilisateur mobile vérifie si les conditions de sortie de la boucle de mesure de puissance sont vérifiées, par exemple, en comparant les valeurs de puissance mesurées. Si les conditions de sortie sont vérifiées 26a, l'algorithme est réinitialisé. Si les conditions de sortie de la boucle de contrôle par l'utilisateur mobile ne sont pas vérifiées 26b, i.e., dans l'exemple la valeur de puissance mesurée pour le signal $S_{bm}$ à partir d'une valeur prédite à l'instant $t+\Delta t$, est supérieure à la puissance mesurée pour le signal $S_{vm}$, alors l'utilisateur mobile lors d'une septième étape 27 consiste à comparer l'instant $t$ à laquelle on a mesuré les deux valeurs de puissance à une valeur de temps trigger déterminée à l'avance (et configurée par la station de base dans un message RRC) qui correspond à une valeur temporelle au-dessous de laquelle, on ne déclenche pas de transfert, afin d'éviter les changements de cellule intempestifs.

L'utilisateur mobile compare la valeur de puissance prédite $P_R\left(D_{\widetilde{eNB_{Desserte}},UE}\right)$ (ou plus généralement $P_R\left(D_{\widetilde{BS_{Desserte}},UE}\right)$ ou $P_R\left(D_{\widetilde{Desserte},UE}\right)$, où la station de base est i.e. désignée eNB en 4G LTE, ou gNB en 5G NR etc.) du signal émis par la station de base de desserte et la valeur de puissance prédite $P_R\left(D_{\widetilde{eNB_{Voisine}},UE}\right)$ (ou plus généralement $P_R\left(D_{\widetilde{BS_{Voisine}},UE}\right)$ ou $P_R\left(D_{\widetilde{Voisine},UE}\right)$, où la station de base est i.e. une eNB en 4G LTE, une gNB en 5G NR etc.) du signal émis par une station de base voisine, et la valeur de puissance prédite est déterminée en fonction d'au moins la différence de phase entre un trajet réfléchi du signal et un trajet direct du signal, $\phi = f(D)$, où $D$ est la distance séparant deux antennes,

Si l'instant de mesure est inférieur à la valeur fixée, alors le procédé retourne à l'étape de deuxième mesure de puissance, étape 25. Si l'instant de mesure a dépassé le seuil, alors l'utilisateur mobile va transmettre, lors d'une huitième étape 28, la valeur de puissance mesurée pour le signal $S_{bm}$ et pour le signal $S_{vm}$ à la station de base de desserte (éventuellement le mobile va transmettre un simple évènement, i.e., si la puissance mesurée pour le signal $S_{vm}$ est supérieure à la puissance mesurée pour le signal $S_{bm}$, ou si la puissance mesurée pour le signal $S_{bm}$ est inférieure à un seuil, ou si la puissance mesurée pour le signal $S_{vm}$ est supérieure à un seuil, dans un intervalle prédéfini par la station de base de desserte), afin que cette dernière, neuvième étape 29, prenne la décision pour que le mobile, soit reste dans la cellule de desserte (station de base de desserte), soit change la connexion vers la cellule voisine (station de base voisine), dans le cas où la puissance du signal $S_{vm}$ est supérieure à la puissance du signal $S_{bm}$.

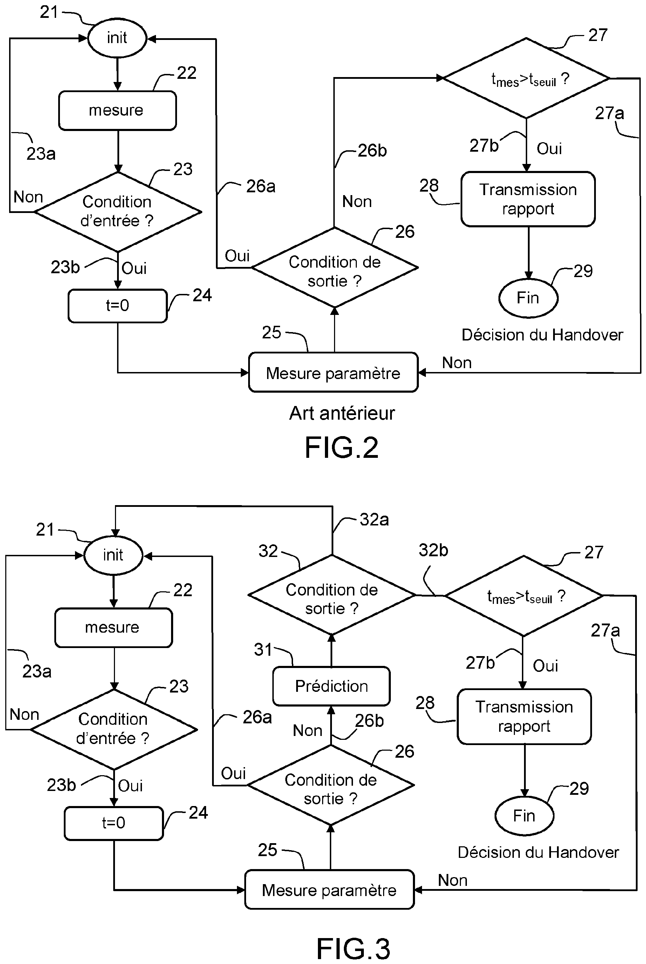

Pour la mise en oeuvre du procédé, l'utilisateur mobile est équipé d'un émetteur/récepteur, 10, relié à un processeur 11 configuré pour exécuter les étapes du procédé décrit à la figure 2. L'avion est aussi équipé d'un dispositif 12 de mesure de puissance des signaux, relié au processeur 11 et à l'émetteur/récepteur 10 et une mémoire 13. L'utilisateur mobile communique avec la station de base de desserte et avec la station de base voisine en utilisant le protocole de communication basé sur la norme LTE ou 5G NR, par exemple. Un émetteur comprend au moins une antenne d'émission $A_{tx}$ et un récepteur comprend au moins une antenne de réception $A_{rx}$. Néanmoins, les mêmes antennes peuvent être utilisées en émission et en réception.

De façon similaire, une station de base pour exécuter les étapes du procédé comporte d'un émetteur/récepteur, 15, relié à un processeur 16 configuré pour exécuter les étapes du procédé qui va être décrit, une mémoire 17. L'émetteur comprend au moins une antenne d'émission $A_{tx}$ et un récepteur comprend au moins une antenne de réception $A_{rx}$. Néanmoins, les mêmes antennes peuvent être utilisées en émission et en réception.

On connaît aussi le document EP 3 352 506 A1 qui décrit une méthode de prédiction et de report de la puissance d'un signal dans une cellule.

On connaît aussi du document Ahamed Md Maruf ET AL : « Path loss slope based cell selection and handover in heterogeneous networks », 2015 IEEE International conférence on electron/information technology (EIT), un procédé de gestion de la procédure de Handover.

Cette solution ne permet pas de gérer au mieux les changements intempestifs de cellule.

L'un des objets de l'invention est de proposer un procédé permettant d'éviter les inconvénients techniques suivants :

[0015] - que l'utilisateur mobile se connecte et/ou se déconnecte à une station de base voisine ou se déconnecte/reconnecte à une station de base de desserte, lorsque ce n'est pas nécessaire,

[0016] - une modification de la structure des stations de base (de desserte ou voisines). Les stations de base au sol et le réseau existant sont réutilisés.

Dans la suite de la description, la lettre $P$ désigne la puissance d'un signal reçu (d'une station de base de desserte ou voisine) et la lettre $\hat{P}$ la puissance prédite ou estimée à l'étape de prédiction.

On utilise le terme « estimation » lorsque la puissance n'est pas mesurée, mais estimée (à partir d'un modèle) et « prédiction » car l'estimation s'effectue au moment $t+\Delta t$ (il s'agit d'une valeur prédite, dans le futur $\Delta t$). Les lettres $P_R$ et $P_{mes}$ (ou les notations $P_R(t)$ et $P_{mes}(t)$) désignent une puissance mesurée directement sur le signal reçu. Les

notations $\widehat{P_R}(t)$ et $\widehat{P_R}(t + \Delta t)$ désignent une puissance estimée (au moment *t*) et respectivement prédite (dans le futur *Δt*).

L'invention concerne un procédé pour gérer le transfert entre cellules dans un système de communication selon la revendication 1. Le système de communication comprend au moins une station de base de desserte, au moins une station de base voisine, et un ou plusieurs utilisateurs mobiles caractérisé en ce qu'il comporte au moins les étapes suivantes :

- pour un utilisateur mobile mesurer la puissance du signal reçu,
- lorsqu'une condition d'entrée d'une boucle de contrôle par l'utilisateur mobile est vérifiée , démarrer un timer *t*, ladite condition d'entrée étant fonction de la mesure de la puissance du signal reçu,
- l'utilisateur mobile mesure une valeur de puissance du signal émis par la station de base de desserte et au moins une valeur de puissance d'un signal émis par une station de base voisine,
- lorsque une condition de sortie de la boucle de contrôle est vérifiée (26a), l'utilisateur mobile continue à mesurer la puissance, ladite condition de sortie étant fonction d'une comparaison entre la valeur de puissance du signal émis par la station de base de desserte mesurée et de l'au moins une valeur de puissance du signal émis pas la station de base voisine mesurée,
- lorsque la condition de sortie de la boucle de contrôle par l'utilisateur mobile n'est pas vérifiée, l'utilisateur mobile détermine la valeur de puissance du signal à partir d'une valeur prédite à un instant *t+Δt*, l'utilisateur mobile compare une valeur de puissance prédite $P_R\left(\widehat{D_{eNB_{Desserte},UE}}\right)$ du signal émis par la station de base de desserte et une valeur de puissance prédite du signal émis par une station de base voisine, et la valeur de puissance prédite est déterminée en fonction d'au moins la différence de phase entre un trajet réfléchi du signal et un trajet direct du signal, $\phi = f(D)$, où *D* est la distance séparant deux antennes, - l'utilisateur mobile vérifie si une condition de sortie de la boucle de transmission du rapport $P_R\left(\widehat{D_{eNB_{Desserte},UE}}\right)(t + \Delta t) > P_R\left(\widehat{D_{eNB_{Voisine},UE}}\right)(t + \Delta t)$ est vérifiée,
- si la condition de sortie de la boucle de transmission du rapport est vérifiée, l'utilisateur mobile reste connecté à la station de base de desserte empêche une transmission du rapport de mesure et ne transmet pas vers la station de base de desserte la valeur de puissance mesurée pour le signal émis par la station de base de desserte et/ou par la station de base voisine,
- si la condition de sortie de la boucle de transmission du rapport n'est pas vérifiée, l'utilisateur mobile compare un instant $t_{mes}$ de mesure de la puissance à une valeur seuil $t_{seuil}$, et
- retourne à la mesure de puissance des signaux si l'instant de mesure est inférieur à la valeur du seuil $t_{seuil}$,
- au contraire transmet le rapport de mesure de puissance avec la valeur de puissance mesurée pour le signal émis par la station de base de desserte et/ou par la station de base voisine, afin que la station de base de desserte déclenche un changement de cellule.

L'utilisateur mobile compare l'instant $t_{mes}+\Delta t$ de prédiction de la puissance à une valeur seuil $t_{seuil}$ dans le cas où la condition de sortie de la boucle par l'utilisateur n'est pas vérifiée.

D'autres caractéristiques et avantages de la présente invention apparaîtront mieux à la lecture de la description d'exemples donnés à titre illustratif et nullement limitatif qui représentent :

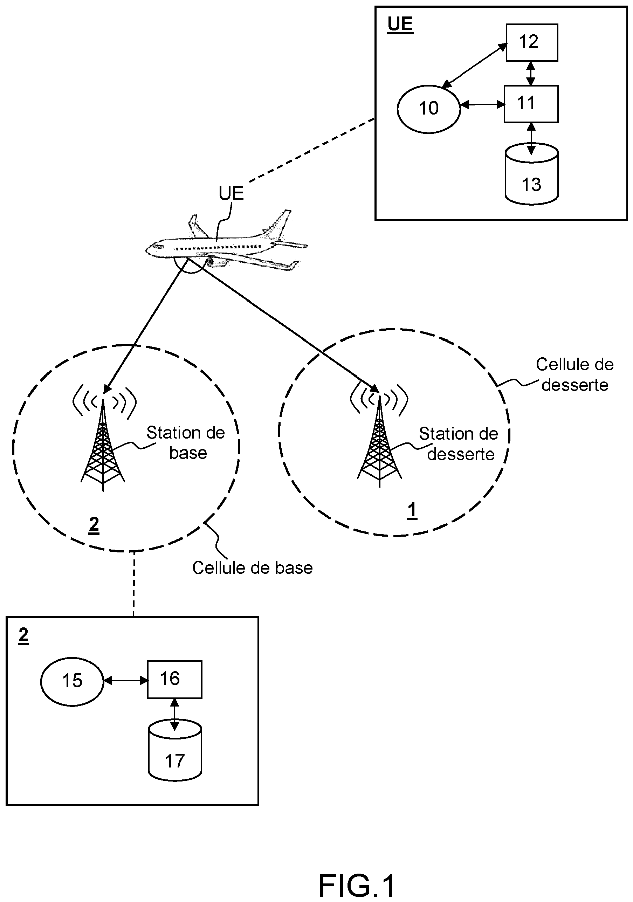

[Fig.1] un exemple d'utilisateur mobile dans un avion,
[Fig.2] les étapes d'un procédé de Handover selon l'art antérieur,
[Fig.3] les étapes d'un procédé de Handover selon l'invention exécutées par l'utilisateur mobile situé dans l'avion,

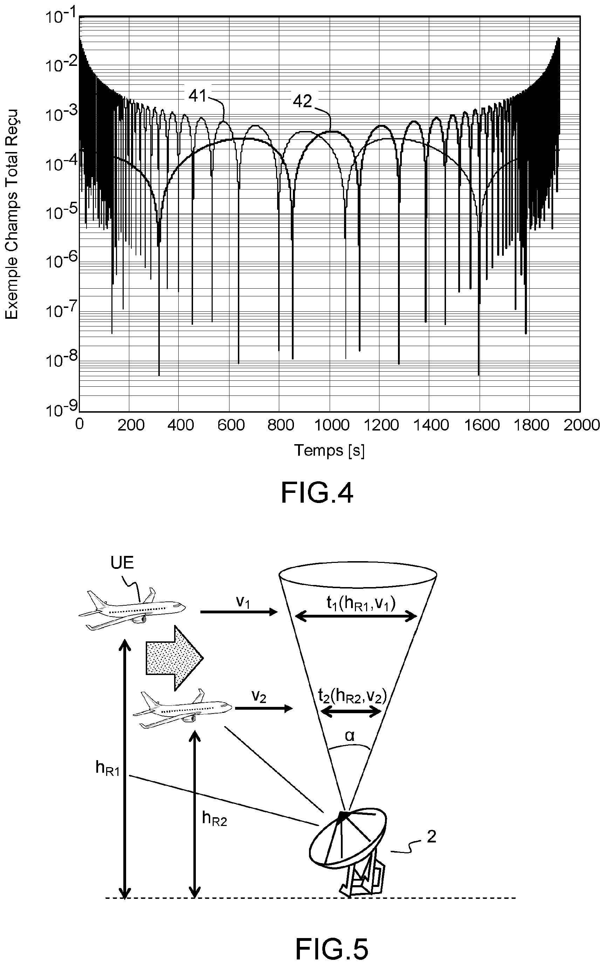

[Fig.4] une illustration des effets d'un modèle de canal à deux trajets,
[Fig.5] une méthode de prédiction pour la valeur de l'intervalle de temps utilisé dans la prédiction,

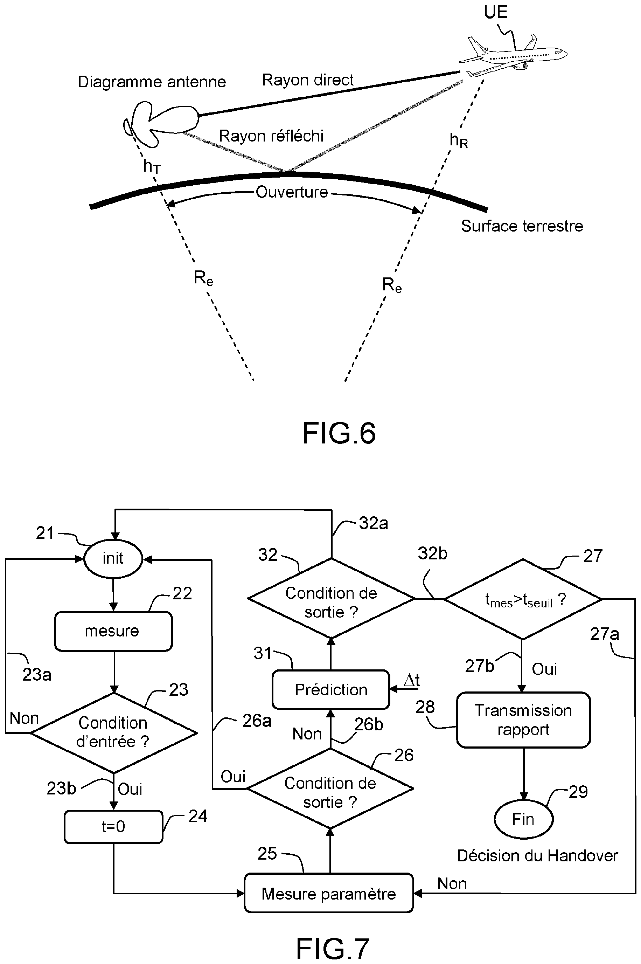

[Fig.6] un exemple de communication possible selon l'invention avec un modèle de canal à deux trajets,
[Fig.7] un exemple d'un procédé de Handover selon l'invention exécutées par l'utilisateur mobile situé dans l'avion, avec la prédiction pour la valeur de l'intervalle,

Afin de bien faire comprendre les étapes du procédé selon l'invention, l'exemple est donné à la figure 3 à titre illustratif et nullement limitatif, pour un utilisateur mobile situé à bord d'un avion, dans une configuration avec une seule station de base voisine. Les étapes communes au procédé de l'art antérieur décrit à la figure 2 portent les mêmes références. L'idée consiste à introduire une étape de prédiction avant de tester une nouvelle condition de sortie de l'utilisateur mobile de la boucle d'envoi de rapport de mesure vers la station de basse de desserte.

La description qui suit est valable notamment pour des applications 4G, LTE, 5G ou 5G NR.

Le procédé selon l'invention comporte au moins les étapes suivantes :

- Première étape - 21 - démarrage, initialisation du procédé, par l'équipement utilisateur,
- Deuxième étape - 22 - mesure de la puissance par l'équipement utilisateur, selon un principe connu de l'homme du métier,
- Troisième étape - 23 - vérification si la condition d'entrée dans la boucle de contrôle d'envoi/transmission du rapport de mesure (par le mobile) est vérifiée, si cette condition n'est pas vérifiée 23a, le procédé retourne à la première étape de démarrage, dans le cas contraire, la condition d'entrée étant vérifiée 23b, le procédé va démarrer un timer $t=0$, quatrième étape 24,
- Cinquième étape - 25 - lors de cette étape, l'utilisateur mobile mesure la valeur de puissance $P_{mes}$ du signal émis par la station de base de desserte et/ou du signal émis par la station de base voisine et reçu(s) par le mobile (en utilisant par exemple une opération de corrélation et/ou multiplication avec un vecteur complexe conjugué et une somme et/ou une méthode de détection d'énergie sur le signal reçu ou sur les pilotes du signal reçu comme i.e. les signaux de référence CRS/«Cell-Spécifie Reference Signals», les signaux de synchronisation primaires PSS/«Primary Synchronisation Signals», et/ou secondaires SSS/ «Secondary Synchronisation Signals», et/ou les signaux de référence pour la démodulation DM-RS/«DeModulation Reference Signals», et/ou les signaux de référence d'information sur l'état du canal CSI-RS/« Channel State Information Reference Signals » pour le management de la ressource radio RRM/« Radio Ressource Management », etc.),
- Sixième étape - 26 - l'utilisateur mobile vérifie si la condition de sortie de la boucle de contrôle d'envoi/transmission du rapport de mesure (par le mobile) est vérifiée,

    si la condition de sortie est vérifiée 26a alors le procédé retourne à l'étape d'initialisation du compteur $t=0$ et de mesure de puissance,

    si la condition de sortie n'est pas vérifiée 26b, afin d'éviter l'envoi d'un rapport de mesure (et ensuite une sortie trop rapide de la cellule, ou une sortie de cellule non appropriée), le procédé va vérifier si la valeur de l'instant $t$ de la mesure est supérieure à une valeur configurée par la station de base (une valeur seuil de temporisation, temps de déclenchement ou « time to trigger »), par la mise en oeuvre de la boucle suivante :

    - Septième étape - 31 - l'utilisateur mobile détermine la valeur de puissance estimée $\hat{P}$ du signal à partir d'un modèle de prédiction ou d'une valeur résultant d'une prédiction à un instant $t+\Delta t$ ; lors de cette étape, la valeur de puissance du signal reçu d'une station de base de desserte et/ou d'une station de base voisine est estimée/prédite. Le signal reçu comporte généralement une somme de signaux avec des amplitudes différentes : signal utile + bruit + interférences. La valeur estimée/prédite est utilisée (ou les valeurs estimées/prédites sont utilisées) pour déterminer si on sort de la boucle de rapport de mesure. Si on décide qu'il n'est pas intéressant de transmettre un rapport de mesure parce que le signal de la cellule de desserte va avoir une valeur élevée à l'instant $t+\Delta t$, l'utilisateur mobile va quitter la boucle d'envoi du rapport de mesure et va (re)démarrer la procédure de recherche,
    - Huitième étape - 32 - vérification de la condition de sortie de boucle de rapport de mesure, 32a,

$$P_R\big(\widetilde{D_{eNB_{Desserte},UE}}\big)(t+\Delta t) > P_R\big(\widetilde{D_{eNB_{Voisine},UE}}\big)(t+\Delta t)$$

    si la condition de sortie de la boucle de transmission du rapport est vérifiée, l'utilisateur mobile empêche la transmission et ne transmet pas de rapport de mesure vers la station de base de desserte, et l'utilisateur mobile va rester connecté à la station de base de desserte ; l'utilisateur peut mettre en mémoire les paquets (l'utilisateur mobile va informer les couches basses comme RLC ou MAC de mémoriser/bufferiser les paquets). L'utilisateur mobile informe ensuite les couches hautes comme RRC ou NAS de ne pas transmettre de message,

    - lorsque la condition de sortie n'est pas vérifiée, 32b, alors l'utilisateur mobile compare l'instant $t_{mes}$ de mesure de la puissance à une valeur seuil (« time to trigger »), si la valeur de l'instant $t_{mes}$ est inférieur à une valeur seuil $t_{seuil}$, le procédé 27a retourne à la deuxième étape de mesure de puissance des signaux, 25, dans le cas contraire, 27b, cela signifie que l'instant de mesure est supérieur à la valeur du seuil de déclenchement de transmission/envoi du rapport de mesure, l'utilisateur mobile va transmettre la valeur de puissance mesurée $P_{mes}$, pour le signal émis par la station de base et/ou pour le signal émis par la station de base voisine (et/ou éventuellement le résultat de la comparaison), vers la station de base de desserte, 28, afin que la station de base de desserte décide d'un changement de cellule, 29. La valeur de la puissance mesurée $P_{mes}$ (et transmise vers la station de base de desserte) peut être également le résultat d'une interpolation ou d'une moyenne sur plusieurs intervalles de mesure.

L'exemple décrit ci-dessus est donné pour une architecture de système comprenant une station de base et une station de base voisine. Sans sortir du cadre de l'invention, les étapes qui viennent d'être décrites s'appliquent pour une architecture système comprenant une station de base et plusieurs stations voisines. Dans ce cas, plusieurs mesures de puissance sont effectuées pour chacune des stations voisines et les conditions d'entrée et/ou de sortie sont testées pour chaque station de base voisine par rapport à la station de base de desserte.

Le modèle de prédiction peut être préétabli et mémorisé dans une base de données ou une mémoire de l'utilisateur mobile. Ce modèle de prédiction peut aussi être construit en temps réel, à partir des mesures de puissance effectuées et en utilisant une loi mathématique permettant de prédire les valeurs de puissance associées à une position géographique de l'utilisateur mobile. De même, on peut aussi utiliser $P_{mes}$ (mesuré par exemple sur les pilotes reçus) pour vérifier le modèle de prédiction pour $\widehat{P_R}(t)$, ce qui permet donc d'avoir plus de confiance et/ou de valider la valeur prédite $\widehat{P_R}$ à l'instant futur $\Delta t$, i.e. $\widehat{P_R}(t + \Delta t)$. En plus, si c'est nécessaire, le modèle de prédiction peut être corrigé en fonction de l'écart entre la puissance mesurée et la puissance prédite.

La figure 4 illustre les effets du modèle de canal de transmission à deux trajets dans le cas d'une transmission depuis la station de base vers l'utilisateur mobile/avion. Cette figure illustre dans un diagramme temps/champ total reçu (i.e. champ total reçu $E_{total}$ en fonction du temps), le signal reçu par l'utilisateur mobile de la station de base de desserte 41, le signal reçu de la station de base voisine 42. Dans ce cas, l'antenne d'émission correspond à l'antenne d'émission d'une des deux stations de base (41 ou 42) et l'antenne de réception à l'antenne de l'utilisateur mobile.

Il est aussi possible d'utiliser un diagramme distance/champ total reçu, en connaissant la vitesse relative de l'avion, c'est-à-dire la vitesse relative entre le mobile et la station de base. Le diagramme peut concerner la puissance reçue en fonction de la distance ou de temps, ou le rapport signal sur bruit en fonction de la distance ou de temps.

Cette simplification est équivalente pour une transmission depuis le mobile/avion vers la station de base au sol, le canal radio étant réciproque.

Néanmoins, les valeurs de la puissance transmise et potentiellement les gains des antennes en émission et en réception (et/ou le nombre des antennes) peuvent changer en fonction du type de transmission choisie (ou du sens de la communication): i.e. depuis la station de base au sol vers le mobile, ou i.e. depuis le mobile/avion vers la station de base au sol.

L'expression de la puissance reçue peut être approximée dans le cas d'un modèle à deux rayons par la relation suivante :

$$P_R = \frac{|E_{total}|^2}{\eta} A_e$$

avec $P_R$: la puissance reçue par l'utilisateur mobile,

$A_e = \dfrac{\lambda^2 G_R}{4\pi}$ : la surface effective de l'antenne en réception de l'utilisateur mobile,

$G_R$ : le gain de l'antenne mobile, à la réception depuis la station de base (on suppose que les directions d'arrivée des trajets directs et réfléchis correspondent à des valeurs de gain similaires)

$\lambda = \dfrac{C}{f}$ : la longueur d'onde de la liaison

$f$: la fréquence de fonctionnement

$C = 3 \cdot 10^8 \text{m/s}$: la vitesse de la lumière

$\eta = 120\pi$ : l'impédance du vide

$E_{total} = E_D + E_R$ : le champ total reçu. Cette expression du champ total tient compte dans le cas d'un modèle à deux rayons du trajet direct et du trajet réfléchi.

Dans le cas d'un trajet direct, l'énergie s'exprime sous la forme suivante :

$$E_D = \sqrt{\frac{\eta P_T G_T}{4\pi\, l^2}}$$

Avec $l = \sqrt{D^2 + \left(h_T - h_R\right)^2}$ : la longueur du trajet direct

D : la distance séparant les deux antennes, l'antenne d'émission et l'antenne de réception

$h_T$ : la hauteur de l'antenne à l'émission (i.e. au niveau d'une station de base)

$h_R$ : la hauteur de l'antenne à la réception (i.e. au niveau d'un utilisateur mobile)

$P_T$ : la puissance à l'émission (i.e. au niveau d'une station de base)

$G_T$ : le gain de l'antenne à l'émission (i.e. au niveau d'une station de base), on suppose que les directions de départ des trajets direct et réfléchi correspondent à des valeurs de gain similaire,

Dans le cas d'un trajet réfléchi, l'énergie est explicitée sous la forme :

$$E_R = \Gamma(\theta)e^{j\phi}\sqrt{\frac{\eta P_T G_T}{4\pi\, l_r^{\,2}}}$$

avec :

$l_r = l_{r1} + l_{r2} = \sqrt{D^2 + \left(h_T + h_R\right)^2}$ : la longueur du trajet réfléchi

$\phi = 2\pi\dfrac{l_r - l}{\lambda} = \dfrac{2\pi}{\lambda}\left(\sqrt{D^2 + \left(h_T + h_R\right)^2} - \sqrt{D^2 + \left(h_T - h_R\right)^2}\right)$ : la différence de phase entre le trajet réfléchi et le trajet direct

$\Gamma(\theta)$ : le coefficient de réflexion de Fresnel (dépend de l'angle, des caractéristiques électriques du sol, de la fréquence, de la polarisation, de la rugosité du sol). Dans cette expression, l'angle $\theta$ varie de 0 degré à 90 degrés. La configuration 90 degrés correspond à une distance D très grande.

En ce qui concerne le coefficient de réflexion, il est défini selon deux composantes. Pour chacune des composantes, on fait intervenir les caractéristiques électriques du sol à savoir la permittivité et la conductivité principalement :

$$\Gamma(\theta) = \frac{X_{//,\perp} - \sqrt{\varepsilon - \sin^2\theta}}{X_{//,\perp} + \sqrt{\varepsilon - \sin^2\theta}}$$

avec

-   $\theta = \arctan\left(\dfrac{D}{h_T + h_R}\right)$ : l'angle d'incidence sur le sol

-   $X_{//,\perp}$ : un coefficient dépendant de la composante du champ réfléchi

    ◦ $X_{//} = \varepsilon\cos\theta$ : composante parallèle
    ◦ $X_{\perp} = \cos\theta$ : composante perpendiculaire

-   $\varepsilon = \varepsilon_r - j\dfrac{\sigma}{\varepsilon_0\, 2\pi f}$ : la permittivité globale du sol /milieu selon une des relations de Debye

    ◦ $\varepsilon_r$ : la permittivité relative du sol
    ◦ $\sigma$ : la conductivité du sol
    ◦ $\varepsilon_0 = 8.85 \cdot 10^{-12}$ : la permittivité du vide
    ◦ $f$ : la fréquence de fonctionnement

L'expression du champ total reçu s'exprime:

$$\left|E_{total}\right|^2 = \left|E_D + E_R\right|^2 = \frac{\eta P_T G_T}{4\pi l^2}\left|1 - e^{j\phi}\right|^2$$

où

$$\left|1 - e^{j\phi}\right|^2 \approx \left(1 - \cos\phi\right)^2 + \sin^2\phi = 2(1 - \cos\phi) = 4\sin^2\left(\frac{\phi}{2}\right).$$

L'expression du module carré du champ total devient donc :

$$\left|E_{total}\right|^2 = \left|E_D + E_R\right|^2 = \frac{\eta P_T G_T}{\pi l^2}\sin^2\left(\frac{\phi}{2}\right)$$

avec

$$\phi \approx \frac{2\pi}{\lambda}\frac{2h_T h_R}{D} = 4\pi\frac{h_T h_R}{\lambda D}$$

car $D$ est grand (approximation obtenue par l'intermédiaire du développement des séries de Taylor de $\sqrt{1+x} \cong 1 + \frac{x^2}{2}$ lorsque X << 1.),

le module carré du champ total présente une dépendance en $\sin^2\left(2\pi\frac{h_T h_R}{\lambda D}\right)$.

$$\sqrt{D^2 + \left(h_T + h_R\right)^2} - \sqrt{D^2 + \left(h_T - h_R\right)^2} \cong D \cdot \sqrt{1 + \frac{\left(h_T + h_R\right)^2}{D^2}} - D \cdot \sqrt{1 + \frac{\left(h_T - h_R\right)^2}{D^2}} =$$

$$D \cdot \left(1 + \frac{\left(h_T^2 + h_R^2 + 2h_T h_R\right)}{D^2} - 1 - \frac{\left(h_T^2 + h_R^2 - 2h_T h_R\right)}{D^2}\right) = D \cdot \frac{2h_T h_R + 2h_T h_R}{D^2} = \frac{4h_T h_R}{D}$$

La puissance reçue s'exprime comme :

$$P_R = \frac{\left|E_{total}\right|^2}{\eta}A_e = \frac{\eta P_T G_T}{\eta \pi l^2}\sin^2\left(\frac{\phi}{2}\right) \cdot \frac{\lambda^2 G_R}{4\pi} = \frac{\lambda^2 P_T G_T G_R}{4\pi^2 l^2}\sin^2\left(\frac{\phi}{2}\right)$$ où

$$\phi = 2\pi\frac{l_r - l}{\lambda} = \frac{2\pi}{\lambda}\left(\sqrt{D^2 + \left(h_T + h_R\right)^2} - \sqrt{D^2 + \left(h_T - h_R\right)^2}\right)$$ pour n'importe quel $D$, et $\phi \approx 4\pi\frac{h_T h_R}{\lambda D}$ si $D$ grand.

La dépendance de la fonction *sin²* indique une périodicité au niveau de la puissance reçue. En conséquence, on pourra déterminer avec précision la position des valeurs minimales et maximales de la puissance, en fonction de la distance entre le mobile et la (les) station(s) de base, les hauteurs des antennes et la longueur d'onde. Alternativement, si on connait par exemple la vitesse (ou la vitesse relative entre le mobile et la (les) station(s) de base) on pourra déterminer avec précision la position des valeurs *min*imales et *max*imales de la puissance, en fonction du temps (ou d'une durée temporelle)

Selon une variante, on peut également déterminer une série de valeurs de *min* et/ou de *max* (et/ou des valeurs intermédiaire), leur position exacte (i.e. la distance entre l'émetteur et la (les) valeur(s) de *min*imum et/ou de *max*imum, ou i.e.. la distance entre la (les) valeur(s) de *min*imum et/ou de *max*imum précédentes et la (les) valeur(s) de *min*imum et/ou de *max*imum suivantes) et les durées ou intervalles temporelles entre une ou plusieurs valeurs, si on considère par exemple la fonction *sin²=1* et *sin²=0* (ou éventuellement des valeurs intermédiaires type sin²=1/2 ou autre). Par exemple la série des *min*imums $min_i$ pourrait être le résultat d'une équation

$$\frac{\pi}{\lambda}\left(\sqrt{Dmin_i{}^2 + (h_T + h_R)^2} - \sqrt{Dmin_i{}^2 + (h_T - h_R)^2}\right) = i * \pi$$

avec *i* un nombre entier naturel, et on obtient donc une série de valeurs $Dmin_i$ qu'on peut parcourir de gauche à droite ou de droite à gauche, et la série des *max*imums $max_i$ pourrait être le résultat d'une équation

$$\frac{\pi}{\lambda}\left(\sqrt{Dmax_i{}^2 + (h_T + h_R)^2} - \sqrt{Dmax_i{}^2 + (h_T - h_R)^2}\right) = (2i + 1) * \frac{\pi}{2}$$

avec i un nombre entier naturel, et on obtient donc une série de valeurs $Dmax_i$ qu'on peut parcourir de gauche à droite ou de droite à gauche. Il est possible de traduire le résultat en valeur de temps, qu'on peut utiliser pour prédire un intervalle de temps (variable) d'interruption, entre deux valeurs de *max* par exemple. Selon une variante on peut considérer un écart de 3*dB* par rapport à une valeur de *max* (i.e. une diminution par deux d'une valeur d'un max), pour prédire l'intervalle de temps (variable) d'interruption entre deux valeurs consécutives.

Selon une variante, si D est grand, on peut également déterminer une série de valeurs de *min* et/ou de *max* (et/ou des valeurs intermédiaire), leur position exacte (i.e., la distance entre l'émetteur et la (les) valeur(s) de *min*imum et/ou de *max*imum, ou i.e. la distance entre la (les) valeur(s) de *min*imum et/ou de *max*imum précédentes et la (les) valeur(s) de *min*imum et/ou de *max*imum suivantes) et les durées ou intervalles temporelles entre une ou plusieurs valeurs, si on considère par exemple la fonction *sin²=1* et *sin²=0* (ou éventuellement des valeurs intermédiaires type sin²=1/2 ou autre). Par exemple la série des *min*imums $min_i$ pourrait être le résultat d'une équation $2\pi \frac{h_T h_R}{\lambda D} = i * \pi$

avec i un nombre entier naturel et donc $Dmin_i = 2\frac{h_T h_R}{\lambda * i}$ qu'on peut parcourir de gauche à droite ou de droite à gauche, et la série des *max*imum $max_i$ pourrait être le résultat d'une équation $2\pi \frac{h_T h_R}{\lambda D} = (2i + 1) * \frac{\pi}{2}$ avec i un nombre entier naturel et donc $Dmax_i = \frac{4h_T h_R}{\lambda * (2i+1)}$ qu'on peut parcourir de gauche à droite ou de droite à gauche. Il est possible d'organiser dans une unique série de valeurs tous les *min*imums et tous les *max*imums, en ordre (i.e.. $min_i$, $max_i$, $min_{i+1}$, $max_{i+1}$, etc.), qu'on peut parcourir de gauche à droite ou de droite à gauche.

Alternativement, on peut déduire aussi la distance entre un *min*imum et un autre *min*imum consécutifs

$\frac{2h_T h_R}{\lambda * i} - \frac{2h_T h_R}{\lambda * (i+1)}$ ou $\frac{2h_T h_R}{\lambda}\left(\frac{1}{i} - \frac{1}{(i+1)}\right) = \frac{2h_T h_R}{\lambda}\left(\frac{i+1-i}{i*(i+1)}\right)$ ou $\frac{2h_T h_R}{\lambda * i * (i+1)}$ ( la série des valeurs peut être parcourue de gauche à droite ou de droite à gauche), avec *i* un nombre entier naturel. Alternativement, la distance entre un *min*imum et un *min*imum consécutif peut être déduite. Il est aussi possible de traduire le résultat en valeur de temps, utilisé, par exemple, pour prédire un intervalle de temps variable, ou pour estimer i.e. le temps nécessaire pour atteindre une prochaine valeur de *min*.

n peut aussi déduire aussi la distance entre un *max*imum et un autre *max*imum consécutifs $\frac{4h_T h_R}{\lambda * (2i-1)} - \frac{4h_T h_R}{\lambda * (2i+1)}$ ou

$\frac{4h_T h_R}{\lambda}\left(\frac{1}{(2i-1)} - \frac{1}{(2i+1)}\right) = \frac{4h_T h_R}{\lambda}\left(\frac{2i+1-2i+1}{(2i-1)*(2i+1)}\right)$ ou $\frac{8h_T h_R}{\lambda(4i^2-1)}$ ( la série des valeurs peut être parcourue de gauche à droite ou de droite à gauche), avec *i* un nombre entier naturel. Alternativement, la distance entre un *max*imum et un *max*imum consécutif peut être déduite. Il est aussi possible de traduire le résultat en valeur de temps, utilisé, par exemple, pour prédire un intervalle de temps variable, ou pour estimer i.e. le temps nécessaire pour atteindre une prochaine valeur de *max.*

Selon une autre variante, on peut déduire aussi la distance entre un minimum et un *max*imum consécutifs

$$\frac{2h_T h_R}{\lambda * i} - \frac{4h_T h_R}{\lambda*(2i+1)} \quad \text{ou} \quad \frac{2h_T h_R}{\lambda}\left(\frac{1}{i} - \frac{2}{(2i+1)}\right) = \frac{2h_T h_R}{\lambda}\left(\frac{2i+1-2i}{i*(2i+1)}\right) \quad \frac{2h_T h_R}{\lambda * i*(2i+1)}$$ (la série des valeurs peut être parcourue de gauche à droite ou de droite à gauche), avec *i* un nombre entier naturel. Alternativement, la distance entre un maximum et un *min*imum consécutif peut être déduite. Il est aussi possible de traduire le résultat en valeur de temps, utilisé, par exemple, pour prédire un intervalle de temps variable, ou pour estimer i.e. le temps nécessaire pour atteindre une prochaine valeur de *max.*

peut estimer ou déduire la distance *D*, et puis déterminer la valeur *i* en utilisant l'équation $\frac{2h_T h_R}{\lambda * i} > D > \frac{2h_T h_R}{\lambda*(i+1)}$ ou

$$\frac{2h_T h_R}{\lambda * i} \geq D > \frac{2h_T h_R}{\lambda*(i+1)} \quad \text{ou} \quad \frac{2h_T h_R}{\lambda * i} \geq D \geq \frac{2h_T h_R}{\lambda*(i+1)} \quad \text{ou} \quad \frac{2h_T h_R}{\lambda * i} > D \geq \frac{2h_T h_R}{\lambda*(i+1)}.$$

Il est aussi possible d'estimer ou de déduire la distance *D*, et déterminer ensuite la valeur i en utilisant l'équation

$$\frac{4h_T h_R}{\lambda*(2i-1)} > D > \frac{4h_T h_R}{\lambda*(2i+1)} \quad \text{ou} \quad \frac{4h_T h_R}{\lambda*(2i-1)} \geq D > \frac{4h_T h_R}{\lambda*(2i+1)} \quad \text{ou} \quad \frac{4h_T h_R}{\lambda*(2i-1)} \geq D \geq \frac{4h_T h_R}{\lambda*(2i+1)} \quad \text{ou}$$

$$\frac{4h_T h_R}{\lambda*(2i-1)} > D \geq \frac{4h_T h_R}{\lambda*(2i+1)}.$$

Alternativement, on peut estimer ou déduire la distance *D*, et déterminer la valeur *i* en utilisant l'équation

$$\frac{2h_T h_R}{\lambda * i} > D > \frac{4h_T h_R}{\lambda*(2i+1)} \quad \text{ou} \quad \frac{2h_T h_R}{\lambda * i} \geq D > \frac{4h_T h_R}{\lambda*(2i+1)} \quad \text{ou} \quad \frac{2h_T h_R}{\lambda * i} \geq D \geq \frac{4h_T h_R}{\lambda*(2i+1)} \quad \text{ou} \quad \frac{2h_T h_R}{\lambda * i} > D \geq \frac{4h_T h_R}{\lambda*(2i+1)}.$$

Selon une variante en fonction de la direction de déplacement, la valeur utilisée pour la prédiction peut dépendre du nombre entier *i*, de la valeur précédente *i-1* ou de la valeur suivante *i+1*.

Alternativement, en utilisant l'équation v=D/t, on peut déduire un intervalle pour appliquer la prédiction, un

intervalle de type $\Delta t = \frac{2h_T h_R}{\lambda * i*(i+1)*v}$ ou $\Delta t = \frac{8h_T h_R}{\lambda(4i^2-1)*v}$ ou $\Delta t = \frac{2h_T h_R}{\lambda * i*(2i+1)*v}$, où *v* est une vitesse relative (au sol ou en air) entre l'utilisateur mobile UE et la station de base (i.e. 4G eNB ou 5G gNB, la station de desserte ou la station voisine). Alternativement on peut considérer des divisions, des sous-multiples ou des multiples de ces valeurs ou intervalles.

Les étapes qui viennent d'être décrites sont applicables lorsque l'on considère une transmission dans le sens station de base vers l'utilisateur mobile. Dans ce cas, l'antenne à l'émission, la hauteur de l'antenne à l'émission, le gain de l'antenne à l'émission sont des paramètres de l'antenne de la station de base, et l'antenne à la réception, la hauteur de l'antenne à la réception, le gain de l'antenne à la réception sont des paramètres de l'antenne de l'utilisateur mobile.

Les étapes qui viennent d'être décrites peuvent être applicables aussi lorsque l'on considère une transmission dans le sens utilisateur mobile vers station de base. Dans ce cas, l'antenne à l'émission, la hauteur de l'antenne à l'émission, le gain de l'antenne à l'émission sont des paramètres de l'antenne de l'utilisateur mobile, et l'antenne à la réception, la hauteur de l'antenne à la réception, le gain de l'antenne à la réception sont des paramètres de l'antenne de la station de base.

Pour une fréquence porteuse donnée, le procédé permet de calculer une estimation (et plus tard une prédiction) de la puissance reçue en fonction de la distance, de l'altitude de l'avion, de la hauteur de l'antenne au sol et de la distance D, valeur prédite de la puissance:

$$\widetilde{P_R(D)} = \frac{\lambda^2 P_T G_T \widetilde{G_R}}{4\pi^2 l(D)^2} \sin^2\left(\frac{\phi(D)}{2}\right)$$

- D : la distance séparant les deux antennes
- gains d'antenne $G_T$ et $G_R$

- $P_T$ : la puissance à l'émission $\lambda = \dfrac{C}{f}$ : la longueur d'onde de la liaison
- $f$ : la fréquence de fonctionnement
- $C = 3 \cdot 10^8$ m/s: la vitesse de la lumière
- $l = f(D)$ la longueur du trajet direct, et qui est une fonction de distance D, la longueur du trajet direct $l$ peut être éventuellement mesurée directement,
- $\phi = f(D)$ la différence de phase entre le trajet réfléchi et le trajet direct, et qui est une fonction de distance D.

Pour une puissance de transmission constante, une altitude de l'avion constante, des gains d'antennes constants, une fréquence d'émission constante (et donc une longueur d'onde constante ou fixée par système de communication), une hauteur de l'antenne au sol constante, la puissance estimée (et plus tard prédite) $\widehat{P_R} = f(D)$ , où la longueur $l = f(D)$ du trajet direct (et implicitement la distance $D = f^{-1}(l)$) peut être déterminée par l'équipement utilisateur mobile à travers la commande/la valeur d'avance temporelle ou TA (Timing Advance), une base de données, une méthode de localisation réseau grâce à des entités du réseau permettant d'avoir une estimée de la position/de la localisation relative ou exacte de l'utilisateur mobile, connues sous les abréviations anglo-saxonnes (SMLC pour Serving Mobile Location Center, GMLC pour Gateway Mobile Location Center), le temps d'arrivée ou TOA (Time of Arrival), la différence de temps d'arrivée ou TDOA (Time Différence of Arrival), la position de géolocalisation ou GNSS (i.e. GPS, GALILEO, GLONASS, COMPASS, etc), ou une toute autre méthode similaire.

Selon une variante de réalisation, pour $D$ suffisamment grand, et/ou en fonction de l'altitude (ou des altitudes), on peut approximer $l=D$.

Selon une autre variante de réalisation, il est possible de déterminer l'altitude de l'avion en temps réel (hauteur à la réception $h_R$ ou hauteur à l'émission $h_T$) en utilisant un radioaltimètre et/ou un baromètre et/ou GNSS, et la distance $D$ ou la longueur $l = f(D)$ à travers la commande/la valeur d'avance temporelle TA (Timing Advance), une base de données (par exemple pour connaître la position de l'antenne sur l'avion, ou pour connaitre le positionnement géographique de chaque station de base, le type de l'antenne, le gain, l'inclinaison de l'antenne, l'angle de l'ouverture du lobe principal et/ou les lobes secondaires, le modèle de canal adéquat pour la prédiction, potentiellement avec de différentes valeurs en fonction du temps, de l'heure, des conditions atmosphériques, de l'humidité, de la température, du type du sol, ou si terre, mer ou océan), une méthode de localisation réseau (SMLC, GMLC), le temps de propagation, temps d'arrivée ou TOA (Time of Arrival), la différence de temps d'arrivée ou TDOA (Time Différence of Arrival), GPS, ou toute autre méthode similaire. La valeur de la puissance prédite $\widehat{P_R} = f(D, h_R)$ si l'utilisateur mobile reçoit, la prédiction étant réalisée au niveau de l'utilisateur mobile ou $\widehat{P_R} = f(D, h_T)$ , si l'utilisateur mobile transmet, en considérant la hauteur de l'antenne au sol constante, et la hauteur de l'antenne sur l'avion égale à la valeur d'altitude de l'avion. La prédiction peut donc s'effectuer en fonction d'au moins un des paramètres : altitude et/ou avance temporel TA (ou Timing Advance), et/ou distance au sol, pour une longueur d'onde donnée.

D peut aussi être fonction du temps et de la vitesse de l'avion, c'est-à-dire qu'en fonction de la vitesse de l'avion $v(t)$ on pourra déterminer : $\widehat{P_R}(t) = f(D(t), h_R(t))$ ou $\widehat{P_R}(t) = f(D(t), h_T(t))$ et donc $\widehat{P_R}(t) = f(v(t), h_R(t))$ ou $\widehat{P_R}(t) = f(v(t), h_T(t))$ respectivement.

De la même manière, à une vitesse v et pour une altitude constante, la valeur de la puissance peut tout simplement s'exprimer en fonction du temps : $\widehat{P_R}(t) = f(t)$ .

Quelques exemples d'algorithmes de HandOver pour l'étape de prédiction vont être décrits.

Une condition possible pour les valeurs de puissance prédite au moment *(t+Δt)* en utilisant la valeur de la puissance prédite $P_R\big(\widehat{D_{eNB_{Desserte},UE}}\big)$ pour la station de base de desserte et la valeur de la puissance prédite $P_R\big(\widehat{D_{eNB_{Voisine},UE}}\big)$ pour la station de base voisine, pour que l'utilisateur mobile déclenche le rapport de mesure afin que la station de base de desserte déclenche plus tard la procédure de HandOver est la suivante:

$$P_R\left(D_{eNB_{Desserte},UE}\right)(t + \Delta t) < P_R\left(D_{eNB_{Voisine},UE}\right)(t + \Delta t)$$

où $D_{eNB_{Desserte},UE}$ (ou plus généralement $D_{Desserte,UE}$, où la station de base est désignée eNB en 4G LTE, gNB en 5G NR) représente la distance $D$ entre la station de base de desserte et l'utilisateur mobile (ou plus précisément la distance séparant les deux antennes, l'antenne d'émission et l'antenne de réception, ou l'antenne de réception et l'antenne d'émission), et où $D_{eNB_{Voisine},UE}$ (ou plus généralement $D_{Voisine,UE}$, où la station de base est désignée eNB en 4G LTE, gNB en 5G NR) représente la distance $D$ entre la station de base voisine et l'utilisateur mobile (ou plus précisément la distance séparant les deux antennes, l'antenne d'émission et l'antenne de réception, ou l'antenne de réception et l'antenne d'émission).

Selon une variante, il est possible de comparer la valeur prédite de puissance $P_R\left(D_{eNB_{Desserte},UE}\right)$ du signal émis par la station de base de desserte plus un paramètre de Hystérésis plus un paramètre de décalage ou d'offset de la station de base de desserte à la valeur prédite de puissance $P_R\left(D_{eNB_{Voisine},UE}\right)$ du signal émis par la station de base voisine plus un paramètre d'offset de la station de base voisine pour des instants $t+\Delta t$, avec la condition suivante pour déclencher le rapport de mesure et plus tard la procédure de HandOver :

$$P_R\left(D_{eNB_{Desserte},UE}\right)(t + \Delta t) + \text{Hysteresis} + \text{Offset}_{eNB_{Desserte}}$$
$$< P_R\left(D_{eNB_{Voisine},UE}\right)(t + \Delta t) + \text{Offset}_{eNB_{Voisine}}$$

« *Hystérésis* » est le paramètre d'hystérésis défini par un message RRC par la station de base de desserte (i.e. dans *reportConfigEUTRA*) pour ce type d'événement.

Le paramètre d'offset $\text{Offset}_{eNB_{Desserte}}$ peut incorporer plusieurs valeurs d'offset comme le décalage spécifique fréquentiel de la fréquence de la cellule de desserte (i.e. comme le paramètre « offsetFreq » correspondant à la fréquence de la cellule comme défini dans le champ *measObjectEUTRA* du message RRC), et/ou le décalage spécifique de la cellule de desserte (i.e. comme le paramètre *« cellIndividualOffset »* correspondant à la fréquence de la cellule défini dans le champ *measObjectEUTRA* du message RRC).

Le paramètre d'offset $\text{Offset}_{eNB_{Voisine}}$ peut également incorporer plusieurs valeurs d'offsets comme le décalage spécifique fréquentiel de la fréquence de la cellule voisine (i.e. comme le paramètre « *offsetFreq* » correspondant à la fréquence de la cellule voisine et défini dans le champ *measObjectEUTRA* d'un message RRC), et/ou le décalage spécifique de la cellule voisine (i.e. comme le paramètre *« cellIndividualOffset »* correspondant à la fréquence de la cellule voisine et défini dans le champ *measObjectEUTRA* d'un message RRC, et mis à zéro si ce n'est pas configuré pour la cellule voisine), et/ou le décalage pour un événement spécifique (i.e. de type « *a3-Offset* » ou « *a3p-Offset* » ou autre comme défini dans le champ *reportConfigEUTRA* d'un message RRC).

Une condition possible, en utilisant la prédiction au moment *(t+Δt),* pour que l'utilisateur mobile empêche la transmission du rapport de mesure et plus tard empêche la procédure de HandOver est d'utiliser le critère suivant :

$$P_R\left(D_{eNB_{Desserte},UE}\right)(t + \Delta t) > P_R\left(D_{eNB_{Voisine},UE}\right)(t + \Delta t)$$

Alternativement il est possible de comparer la valeur prédite de puissance $P_R\left(D_{eNB_{Desserte},UE}\right)$ du signal émis par la station de base de desserte moins un paramètre de Hystérésis, auquel on ajoute un paramètre d'offset de la station de base de desserte à la valeur prédite de puissance $P_R\left(D_{eNB_{Voisine},UE}\right)$ du signal émis par la station de base voisine plus un paramètre d'offset de la station de base voisine pour des instants *t+Δt,* avec la condition suivante pour empêcher la transmission du rapport de mesure et interdire un changement de cellule plus tard:

$$P_R\left(D_{eNB_{Desserte},UE}\right)(t + \Delta t) - \text{Hysteresis} + \text{Offset}_{eNB_{Desserte}} > P_R\left(D_{eNB_{Voisine},UE}\right)(t + \Delta t) + \text{Offset}_{eNB_{Voisine}}.$$

La valeur de la puissance prédite au moment futur $\Delta t$ peut être également le résultat d'une interpolation ou d'une moyenne sur plusieurs intervalles de prédiction (par exemple sur plusieurs intervalles ou plusieurs valeurs autour de la valeur future $\Delta t$).

D'une manière générale, les conditions pour décider de déclencher la procédure de Handover (« < ») ou de ne pas déclencher la procédure de Handover (« > ») s'expriment de la manière suivante :

la puissance prédite $\widehat{P_R(D)}$ est égale à $\frac{\lambda^2 P_T G_T \widehat{G_R}}{4\pi^2 l(D)^2} sin^2\left(\frac{\phi(D)}{2}\right)$ prédit et l'utilisateur mobile transmet le rapport de mesure de puissance afin que la station de base de desserte déclenche la procédure de changement de cellule lorsque la condition suivante est réunie :

$$\frac{\lambda^2 P_T G_T G_R}{4\pi^2 l(D_{Desserte,UE})^2} \widehat{sin^2\left(\frac{\phi(D_{Desserte,UE})}{2}\right)}(t + \Delta t) < \frac{\lambda^2 P_T G_T G_R}{4\pi^2 l(D_{Voisine,UE})^2} \widehat{sin^2\left(\frac{\phi(D_{Voisine,UE})}{2}\right)}(t + \Delta t)$$

avec

D : la distance séparant les deux antennes

$D_{Desserte,UE}$ : la distance séparant les deux antennes entre la station de base de desserte et l'utilisateur mobile

$D_{Voisine,UE}$ : la distance séparant les deux antennes entre la station de base voisine et l'utilisateur mobile

$G_T$ et $G_R$ gains d'antenne

$\lambda = \frac{C}{f}$ : la longueur d'onde de la liaison

$f$ : la fréquence de fonctionnement

$C = 3 \cdot 10^8$ m/s: la vitesse de la lumière

$P_T$ : la puissance à l'émission

$l = f(D)$ la longueur du trajet direct.

L'utilisateur mobile ne transmet pas le rapport de mesure et interdit un changement de cellule lorsque

$$\frac{\lambda^2 P_T G_T G_R}{4\pi^2 l(D_{Desserte,UE})^2} \widehat{sin^2\left(\frac{\phi(D_{Desserte,UE})}{2}\right)}(t + \Delta t) > \frac{\lambda^2 P_T G_T G_R}{4\pi^2 l(D_{Voisine,UE})^2} \widehat{sin^2\left(\frac{\phi(D_{Voisine,UE})}{2}\right)}(t + \Delta t)$$

Lorsque la puissance d'émission $P_T$ est constante (i.e. même puissance de transmission maximale pour les pilotes), les gains d'antenne à l'émission $G_T$ similaires pour la station de base de desserte et la station voisine, et le gain d'antenne à la réception $G_R$ constant (i.e. car potentiellement la direction d'arrivée du signal provenant de la station de base de desserte peut être différente de la direction d'arrivée du signal provenant de la station de base voisine), l'étape de comparaison (et qui intègre la méthode basée sur la prédiction) devient :

$$\frac{1}{l(D_{Desserte,UE})^2} \widetilde{sin^2\left(\frac{\phi(D_{Desserte,UE})}{2}\right)}(t+\Delta t) \underset{>}{<} \frac{1}{l(D_{Voisine,UE})^2} \widetilde{sin^2\left(\frac{\phi(D_{Voisine,UE})}{2}\right)}(t+\Delta t).$$

Avec la condition suivante pour que l'utilisateur mobile empêche la transmission du rapport de mesure et interdise un changement de cellule:

$$\frac{sin^2\left(\frac{\phi(\widetilde{D_{Desserte,UE}})}{2}\right)}{l(D_{Desserte,UE})^2}(t+\Delta t) > \frac{sin^2\left(\frac{\phi(\widetilde{D_{Voisine,UE}})}{2}\right)}{l(D_{Voisine,UE})^2}(t+\Delta t)$$

Alternativement, la condition pour que l'utilisateur mobile empêche la transmission du rapport de mesure et pour interdire un changement de cellule est:

$$k \cdot \frac{sin^2\left(\frac{\phi(\widetilde{D_{Desserte,UE}})}{2}\right)}{l(D_{Desserte,UE})^2}(t+\Delta t) > \frac{sin^2\left(\frac{\phi(\widetilde{D_{Voisine,UE}})}{2}\right)}{l(D_{Voisine,UE})^2}(t+\Delta t)$$

Où k est un paramètre qui sert à compenser l'écart potentiel entre les gains d'antenne (i.e. le rapport entre le $G_R$ sur la direction de la station de base de desserte et $G_R$ sur la direction de la station de base voisine, et/ou le rapport entre le $G_T$ de la station de base de desserte et $G_T$ de la station de base voisine).

En pratique, les distances peuvent être facilement estimées (GPS, bases de données, Timing Advance, TDOA, TOA, etc.) et l'estimation de la longueur du trajet direct $l=f(D)$ et/ou l'estimation de la distance $D$ au moment *(t)* permet/permettent de déterminer $\widehat{P_R}(D)$ au moment *(t)*, et par extension la prédiction de la longueur du trajet direct $l=f(D)$ et/ou la prédiction de la distance $D$ au moment *(t+Δt)* permet/permettent de déterminer $\widehat{P_R}(D)$ au moment *(t+Δt)*, i.e. en fonction de la vitesse relative (entre le mobile et la station de base) et de la position précédente (ou distance et/ou longueur précédente). A remarquer aussi que la fonction $\phi$ est dépendante de $\lambda$ (la longueur de l'onde) ce qui indique un comportement différent en fonction de la fréquence porteuse.

Le procédé selon l'invention trouve notamment son application pour des fréquences de la technologie 4G mais aussi 5G et 5G NR (New Radio), par exemple pour des bandes de fréquence différentes de la 4G, notamment pour des fréquences < 6GHz ou > 6 GHz, et/ou pour des symboles OFDM plus courts et un espacement inter-sous-porteuses différent, i.e. multiple de 15 kHz.

Selon une autre variante, il est possible de prévoir une comparaison asymétrique de type :

$$P_R\left(\widetilde{D_{eNB_{Desserte},UE}}\right)(t) \underset{>}{<} P_R\left(\widetilde{D_{eNB_{Voisine},UE}}\right)(t+\Delta t)$$

et/ou

$$P_R\left(\widetilde{D_{eNB_{Desserte},UE}}\right)(t+\Delta t) \underset{>}{<} P_R\left(\widetilde{D_{eNB_{Voisine},UE}}\right)(t)$$

avec $P_R\left(\widetilde{D_{eNB_{Desserte},UE}}\right)(t)$ et $P_R\left(\widetilde{D_{eNB_{Voisine},UE}}\right)(t)$ les puissances estimées de la station de base de desserte et voisine au moment *(t)* et avec $P_R\left(D_{eNB_{Voisine},UE}\right)(t + \Delta t)$ et $P_R\left(D_{eNB_{Desserte},UE}\right)(t + \Delta t)$ les puissances prédites de la station de base voisine et de desserte au moment *(t+Δt)*.

Il est aussi possible de prévoir une comparaison asymétrique de type :

$$P_R\left(D_{eNB_{Desserte},UE}\right)(t) \underset{>}{<} P_R\left(D_{eNB_{Voisine},UE}\right)(t + \Delta t)$$

et/ou

$$P_R\left(D_{eNB_{Desserte},UE}\right)(t + \Delta t) \underset{>}{<} P_R\left(D_{eNB_{Voisine},UE}\right)(t)$$

avec $P_R(D_{eNB_{Desserte},UE})(t)$ et $P_R(D_{eNBVoisine,UE})(t)$ les puissances mesurées $P_R=P_{mes}$ de la station de base de desserte et voisine au moment *(t)* et avec $P_R\left(D_{eNB_{Voisine},UE}\right)(t + \Delta t)$ et $P_R\left(D_{eNB_{Desserte},UE}\right)(t + \Delta t)$ les puissances prédites de la station de base voisine et de desserte au moment *(t+Δt)*. Dans les deux cas les puissances sont mesurées (directement sur le signal reçu, par exemple sur les pilotes CRS et/ou PSS et/ou SSS et/ou DM-RS et/ou CSI-RS, etc.) ou les puissances sont prédites (en utilisant le modèle de prédiction pour le canal à deux trajets) par le mobile UE, et le mobile UE effectue la comparaison entre la puissance mesurée et la puissance prédite, ou la comparaison entre la puissance prédite et la puissance mesurée.

Par exemple, on transmet le rapport de mesure de puissance et on déclenche un changement de cellule si la valeur mesurée de puissance à l'instant *(t)* du signal émis par la station de base de desserte est inférieure à la valeur prédite de puissance $P_R\left(D_{eNB_{Voisine},UE}\right)$ du signal émis par la station de base voisine à l'instant *(t+Δt)*, ou si

$$P_R\left(D_{eNB_{Desserte},UE}\right)(t) < P_R\left(D_{eNB_{Voisine},UE}\right)(t + \Delta t),$$

et/ou on empêche la transmission du rapport de mesure et on interdit un changement de cellule si la valeur mesurée de puissance à l'instant *(t)* du signal émis par la station de base de desserte est supérieure à la valeur prédite de puissance du signal émis par la station de base voisine à l'instant *(t+Δt),* ou si

$$P_R\left(D_{eNB_{Desserte},UE}\right)(t) > P_R\left(D_{eNB_{Voisine},UE}\right)(t + \Delta t).$$

Alternativement, on transmet le rapport de mesure de puissance et on déclenche un changement de cellule si la valeur prédite de puissance $P_R\left(D_{eNB_{Desserte},UE}\right)$ à l'instant *(t+Δt)* du signal émis par la station de base de desserte est inférieure à la valeur mesurée de puissance $P_R(D_{eNB_{Voisine},UE})$ du signal émis par la station de base voisine à l'instant *(t)*, ou si $P_R\left(D_{eNB_{Desserte},UE}\right)(t + \Delta t) < P_R(D_{eNB_{Voisine,}UE})(t),$

et/ou on empêche la transmission du rapport de mesure et on interdit un changement de cellule si la valeur prédite de puissance à l'instant *(t+Δt)* du signal émis par la station de base de desserte est supérieure à la valeur mesurée de puissance du signal émis par la station de base voisine à l'instant *(t)*, ou si

$$P_R\left(D_{eNB_{Desserte},UE}\right)(t + \Delta t) > P_R\left(D_{eNB_{Voisine},UE}\right)(t).$$

Alternativement, il est possible d'utiliser la périodicité entre les effets de maximum *(max)* et de minimum *(min)*, i.e., si les *max* et les *min* des valeurs de puissances sont trop proches (deux *min* ou deux *max* consécutifs, ou si le temps/l'intervalle entre un *min* et un *max* est inférieur à i.e. *50* ms), l'étape de prédiction va interdire le déclenchement d'un HandOver (i.e. condition de sortie de la boucle pour le rapport de mesure). Cela peut arriver quand on est proche d'une des deux stations de base où le signal reçu est généralement bon et donc il n'est pas nécessaire d'effectuer un HandOver même si le signal présente en réception des effets de *min* sur de très courts intervalles à cause d'un deuxième trajet.

Si le mobile détermine 31 que pour la cellule de desserte le temps entre deux minimums consécutifs (i.e. de puissance prédite, de *SINR*, de *SNR, RSRQ/RSRP* prédits, ou d'énergie prédite du champ électromagnétique reçu) est inférieur à une valeur de seuil de 50 ms i.e. *temps(min$_i$,min$_{i+1}$)< 50* ms ou *temps(min$_{i-1}$,min$_i$)< 50 ms,* ou le temps entre deux maximums consécutifs (i.e. de puissance prédite, de *SINR,* de *SNR, RSRQ/RSRP* prédits, ou d'énergie prédite du champ électromagnétique reçu) est inférieur à un seuil de 50 ms i.e. *temps(max$_i$,max$_{i+1}$)<50* ms ou *temps(max$_{i-1}$,max$_i$)<50* ms, on empêche la transmission du rapport de mesure (alternative à la boucle de prédiction avec une étape 31 mais dans laquelle on prédit/on mesure le temps entre deux *min*imums consécutifs ou le temps entre deux *max*imums consécutifs au lieu de prédire la puissance). Ou, par exemple, lorsque le mobile détermine 31 que pour la cellule de desserte le temps entre un minimum et un maximum consécutifs (i.e. de puissance prédite, de *SINR,* de *SNR, RSRQ/RSRP* prédits, ou d'énergie prédite du champ électromagnétique reçu) est inférieur à une valeur de seuil de 50 ms i.e. *temps(min$_i$,max$_{i+1}$)< 50* ms ou *temps(min$_i$,max$_i$)< 50* ms, ou le temps entre un minimum et un maximum consécutifs (i.e. de puissance prédite, de *SINR,* de *SNR, RSRQ/RSRP* prédits, ou d'énergie prédite du champ électromagnétique reçu) est inférieur à un seuil de 50 ms i.e. *temps(max$_i$,min$_{i+1}$)<50* ms ou *temps(max$_i$,min$_i$)<50* ms, on empêche la transmission du rapport de mesure (alternative à la boucle de prédiction avec une étape 31 dans laquelle on prédit/on mesure le temps entre un *min*imum et un *max*imum consécutifs ou le temps entre un *max*imum et un *min*imum consécutifs au lieu de prédire la puissance).

L'idée est d'éviter la connexion inutile d'un utilisateur mobile UE vers une station de base voisine, si le temps d'interruption entre l'utilisateur mobile UE et la station de base de desserte est suffisamment faible et inférieur à une durée d'interruption acceptable, définie par le service (i.e. *50* ms ou plus, par exemple applicable service par service).

Les étapes du procédé selon l'invention s'appliquent pour la gestion des HandOvers dans des systèmes de transmission de type 3GPP, en utilisant les évènements existants dans cette norme et en utilisant les valeurs de puissance calculées par les algorithmes de prédiction selon l'invention.

Le procédé présente l'avantage de différencier les HandOvers nécessaires, par exemple, pour des interruptions de service supérieures à 50 ms où le rapport de mesure doit être transmis et un HandOver réalisé, des HandOvers qu'il n'est pas nécessaire de déclencher lorsque la durée de l'interruption de service n'a pas d'impact sur le fonctionnement du dispositif. En effet, dans moins de *50%* des cas, il n'est pas nécessaire de déclencher un HandOver. Une bonne gestion des HandOvers représente un gain en débit, la station de base de desserte ou la station de base cible (i.e. station de base voisine qui devient la nouvelle station de base de desserte) ne doit pas reconfigurer le mobile, et l'effet ping-pong (connexion/déconnexion successive du mobile entre deux stations de base) est évité.

La valeur du paramètre de prédiction temporel $\Delta t$ correspondant à la prédiction associé à la gestion du HandOver peut être choisie selon plusieurs critères.

Une première manière consiste à choisir la valeur de $\Delta t$ dans une base de données qui a été préétablie en tenant compte du trajet suivi par un utilisateur mobile, par exemple un avion, plusieurs fois par jour. Il est aussi possible de déduire la valeur de $\Delta t$ directement de la pente de la courbe représentant la mesure de puissance en fonction du temps/ ou de la position/ ou de la distance pour estimer la variation de puissance/ou la distance entre deux minimums consécutifs/ou la distance entre deux maximums consécutifs/ou la distance entre un minimum et un maximum consécutifs/ou la distance entre un maximum et un minimum consécutifs. Il est aussi possible de déduire la valeur de $\Delta t$ directement de la durée entre deux minimum consécutifs/ou la durée entre deux maximum consécutifs/ou la durée entre un minimum et un maximum consécutifs/ou la durée entre un maximum et un minimum consécutifs. Il est aussi possible de déduire la valeur de $\Delta t$ directement à partir du modèle de prédiction, en utilisant la puissance prédite au lieu d'utiliser la puissance mesurée. La prédiction peut s'effectuer en fonction d'au moins un des paramètres suivants: l'altitude, l'avance temporelle TA ou la longueur d'onde.

Il est aussi possible de déduire la valeur de $\Delta t$ directement à partir du modèle de prédiction, après avoir déterminé la valeur i (i.e. un nombre entier qui correspond à un minimum et/ou un maximum dans une série de valeurs), en utilisant un intervalle de prédiction de type $\Delta t = \frac{2h_T h_R}{\lambda * i * (i+1) * v}$, ou $\Delta t = \frac{8 h_T h_R}{\lambda (4i^2 - 1) * v}$, ou $\Delta t = \frac{2 h_T h_R}{\lambda * i * (2i+1) * v}$, où $v$ est une vitesse relative (au sol ou en air) entre l'utilisateur mobile UE et la station de base (i.e. 4G eNB, ou 5G gNB, la station de desserte ou la station voisine). Alternativement, on peut considérer des divisions, des sous-multiples ou des multiples de ces valeurs ou intervalles.

La valeur de $\Delta t$ peut aussi être calculée en fonction de l'altitude de l'utilisateur mobile et de sa vitesse. Afin d'éviter les lobes secondaires d'une antenne voisine, on applique un modèle mathématique basé sur la connaissance de l'angle d'ouverture d'un lobe secondaire en considérant par exemple une valeur d'angle donnée pour le cas le plus défavorable. En fonction de l'angle d'ouverture, de l'altitude (i.e. $h_{R1}$, $h_{R2}$), figure 5, et de la vitesse relative de l'avion $v_1, v_2$ par rapport à la station de base au sol, il est possible de déterminer la durée $t_1(h_{R1}, v_1)$ ou la durée $t_2(h_{R2}, v_2)$ pendant laquelle l'avion reste dans le lobe secondaire de l'antenne équipant la station de base. A la vitesse de croisière et haute altitude, le mobile doit parcourir une première distance, et à la vitesse d'atterrissage/décollage et faible altitude le mobile doit parcourir une deuxième distance. Par exemple, l'ouverture du lobe est plus importante à une altitude $h_{R1}$ ou moins importante à une altitude $h_{R2}$, et en fonction de la vitesse de l'avion i.e. vitesse de croisière $v_1$ ou vitesse d'atterrissage/décollage $v_2$, le mobile peut rester plus ou moins dans la zone du lobe. Cette information est utilisée pour établir la valeur de $\Delta t$, période pendant laquelle la transmission du rapport de mesure effectuée par l'utilisateur mobile vers la station de base doit être temporisée pour éviter des changements intercellulaires non justifiés.

La figure 6 illustre les notions de trajet réfléchi et trajet direct

la longueur du trajet direct $l = \sqrt{D^2 + (h_T - h_R)^2}$

la longueur du trajet réfléchi $l_r = l_{r1} + l_{r2} = \sqrt{D^2 + (h_T + h_R)^2}$

$D$ ("ouverture" sur la figure 6): la distance séparant les deux antennes, l'antenne d'émission et l'antenne de réception

$h_T$ : la hauteur de l'antenne à l'émission (i.e. au niveau d'une station de base)

$h_R$ : la hauteur de l'antenne à la réception (i.e. au niveau d'un utilisateur mobile)

$R_E$: le Rayon de la Terre (en Anglais « Earth Radius »), pour exemple.

Le procédé selon l'invention prend en compte une prédiction du comportement de la variation possible de la puissance du signal mesuré par un utilisateur mobile, ou tout autre paramètre choisi pour gérer les procédures de HandOver. L'utilisateur mobile va ainsi pouvoir bloquer l'envoi du rapport de mesure et les évènements de HandOver en fonction d'une prédiction donnée à un instant $t+\Delta t$. Cette solution présente notamment l'avantage de ne pas modifier la structure et le fonctionnement d'une station de base de desserte ou d'une station de base voisine. La modification se situe au niveau de l'équipement utilisateur et n'a pas d'impact sur une station de base. L'utilisateur mobile ne se connecte pas pour une courte durée sur une station de base voisine, ce qui permet de mieux gérer l'énergie au niveau d'un utilisateur et les ressources disponibles au niveau du système de communication. La décision de HandOver est toujours effectuée par la station de base de desserte selon une procédure connue de l'homme du métier qui ne sera pas détaillée.

La figure 7 illustre une variante de réalisation de la figure 3, qui comprend en plus des éléments de la figure 3, une estimation ou une prédiction de $\Delta t$ pour exécuter l'étape 31.

Alternativement, la couche MAC pourrait prendre en compte la connaissance sur le canal à deux trajets pour temporiser/ mettre dans une mémoire, les paquets à transmettre (i.e. dans une mémoire tampon) avant que l'avion rentre dans une zone de diminution temporaire de la puissance /SNR/champ électromagnétique sur le canal radio. On peut introduire une modification du protocole ou du processus HARQ par exemple (pour éviter la transmission et/ou la retransmission et/ou les retransmissions dans une zone de diminution temporaire de la qualité du canal).

Selon une variante, il est possible d'introduire une modification de la couche PHY et MAC pour une adaptation du type de modulation (i.e. plus robuste), et/ou du codage de canal (i.e. plus robuste) ou de la puissance émise (i.e. plus forte) pour combattre l'effet de destruction des trajets sur le canal radio (i.e. une adaptation du lien ou une adaptation de puissance qui peut avoir lieu avant la transmission, et en utilisant la méthode de prédiction). La modification de la puissance émise pourrait également être implémentée grâce à un algorithme (adapté au canal à deux trajets) de contrôle de puissance, et par exemple grâce à une boucle de contrôle de puissance spécifique (pour le canal à deux trajets) entre la station de base et le mobile. Le mécanisme avec une temporisation avant la coupure de signal prédite est possible suite à la méthode de prédiction sur le canal radio à deux trajets. On peut utiliser la connaissance du canal radio pour temporiser les paquets si le minimum est temporaire. Ceci est applicable pour un utilisateur en liaison montante ou pour une station de base en liaison descendante.

La temporisation avant la coupure de signal prédite pour les paquets à transmettre pourrait être appliquée au niveau d'un utilisateur mobile en liaison montante pour temporiser les paquets qui sont transmis vers la station de base.

La temporisation avant la coupure de signal prédite pour les paquets à transmettre pourrait aussi être appliquée au niveau d'une station de base pour temporiser les paquets qui sont transmis vers l'utilisateur mobile.

Alternativement à la comparaison basée sur la prédiction de la valeur de la puissance (*P* ou *RSRP* prédit) pour le canal à deux trajets, on peut tenir compte de comparaisons entre des rapports signal à bruit prédits ou des rapports prédits de signal à bruit plus interférence (*SNR* ou *SINR* prédits, *RSRQ* prédit) ou d'autres valeurs prédites qui représentent la qualité de la communication dans le futur $\Delta t$.

Par exemple, la puissance du bruit peut être calculée en fonction de la bande du signal et la densité spectrale de bruit. Grâce à la puissance prédite dans le futur $\Delta t$ on peut prédire le rapport signal à bruit (*SNR* prédit) dans le futur $\Delta t$. En ce qui concerne la prédiction du rapport signal à bruit plus interférence (*SINR* prédit) dans le futur $\Delta t$, le modèle peut également considérer la prédiction de la valeur de l'interférence dans le futur $\Delta t$, ce qu'il est possible i.e. si on prend en compte la connaissance sur le canal à deux trajets entre le mobile et (au moins) une station de base voisine qui génère l'interférence au niveau d'un mobile.

Selon une variante, la prédiction de *SINR* reçue dans le futur *Δt* par le récepteur mobile peut être faite par la station de base de desserte avec le modèle de prédiction pour le canal à deux trajets.

Selon une variante de réalisation, la station de base peut se trouver sur l'avion, sur l'aéronef avec ou sans pilote, sur des plateformes en haute altitude (HAPS ou « High Altitude Platform Station », déployés à très haute altitude, par exemple dans la stratosphère), sur des ballons dirigeables, ou sur un satellite, et le mobile peut se retrouver par exemple au sol car le modèle de prédiction pour le canal à deux trajets reste valide.

Selon une variante, les deux dispositifs station de base et utilisateur mobile peuvent se trouver sur des avions, sur des aéronefs avec ou sans pilote, sur des plateformes en haute altitude (HAPS ou « High Altitude Platform Station », déployés à très haute altitude, par exemple dans la stratosphère), sur des ballons dirigeables, ou sur des satellites.

Selon une variante de réalisation, au moins une station de base (i.e. de desserte ou voisine) peut se trouver au sol et au moins une station de base (i.e. voisine ou de desserte) peut se trouver sur un aéronef, sur une plateforme en haute altitude, sur un ballon dirigeable, un avion ou un satellite.

## Revendications

**1.** Procédé exécuté par un équipement utilisateur pour gérer le transfert entre cellules dans un système de communication comprenant au moins une station de base de desserte, au moins une station de base voisine, et un ou plusieurs utilisateurs mobiles **caractérisé en ce qu'**il comporte au moins les étapes suivantes :

- pour un utilisateur mobile mesurer la puissance du signal reçu,
- lorsqu'une condition d'entrée d'une boucle de contrôle est vérifiée, démarrer un timer *t*, ladite condition d'entrée étant fonction de la mesure de la puissance du signal reçu,
- mesurer une valeur de puissance du signal émis par la station de base de desserte et au moins une valeur de puissance d'un signal émis par une station de base voisine,
- lorsque une condition de sortie est vérifiée (26a), continuer à mesurer la puissance, ladite condition de sortie étant fonction d'une comparaison entre la valeur de puissance du signal émis par la station de base de desserte mesurée et de l'au moins une valeur de puissance du signal émis par la station de base voisine mesurée,
- lorsque la condition de sortie d'une boucle de contrôle n'est pas vérifiée (26b), déterminer (31) la valeur de puissance du signal à partir d'une valeur prédite à un instant *t+Δt,* comparer une valeur de puissance prédite

$$P_R\left(D_{\overbrace{eNB_{Desserte},UE}}\right)$$ du signal émis par la station de base de desserte et une valeur de puissance prédite

$$P_R\left(D_{\overbrace{eNB_{Voisine},UE}}\right)$$ du signal émis par une station de base voisine, et la valeur de puissance prédite est déterminée en fonction d'au moins la différence de phase entre un trajet réfléchi du signal et un trajet direct du signal, $\phi = f(D)$, où D est la distance séparant deux antennes,
- vérifier (32) si une condition de sortie de la boucle de transmission du rapport

$$P_R\left(D_{\overbrace{eNB_{Desserte},UE}}\right)(t + \Delta t) > P_R\left(D_{\overbrace{eNB_{Voisine},UE}}\right)(t + \Delta t)$$

est vérifiée,
- si la condition de sortie de la boucle de transmission du rapport est vérifiée, (32a), rester connecté à la station de base de desserte, empêcher une transmission du rapport de mesure et ne pas transmettre vers la station de base de desserte la valeur de puissance mesuré pour le signal émis par la station de base de desserte et/ou par la station de base voisine,
- si la condition de sortie de la boucle de transmission du rapport n'est pas vérifiée, (32b), comparer (27) un instant $t_{mes}$ de mesure de la puissance à une valeur seuil $t_{seuil}$, et
- retourner (27a) à la mesure de puissance des signaux (25) si l'instant de mesure est inférieur à la valeur du seuil $t_{seuil}$,
- au contraire (27b) transmettre le rapport de mesure de puissance avec la valeur de puissance mesuré pour le signal émis par la station de base de desserte et/ou par la station de base voisine, (28), afin que la station de base de desserte déclenche un changement de cellule, (29).

**2.** Procédé selon la revendication 1 **caractérisé en ce que** l'équipement utilisateur compare l'instant $t_{mes}+\Delta t$ de prédiction de la puissance à une valeur seuil $t_{seuil}$ dans le cas où la condition de sortie de la boucle n'est pas vérifiée.

**3.** Procédé selon la revendication 1 **caractérisé en ce que** l'équipement utilisateur transmet le rapport de mesure de puissance afin que la station de base de desserte déclenche un changement de cellule si la valeur prédite de puissance $P_R\left(D_{\widehat{eNB_{Desserte}},UE}\right)$ du signal émis par la station de base de desserte est inférieure à la valeur prédite de puissance $P_R\left(D_{\widehat{eNB_{Voisine}},UE}\right)$ du signal émis par la station de base voisine pour des instants $t+\Delta t$ :

$$P_R\left(D_{\widehat{eNB_{Desserte}},UE}\right)(t+\Delta t) < P_R\left(D_{\widehat{eNB_{Voisine}},UE}\right)(t+\Delta t).$$

**4.** Procédé selon la revendication 1 **caractérisé en ce que** l'équipement utilisateur transmet le rapport de mesure de puissance afin que la station de base de desserte déclenche un changement de cellule si la valeur prédite de puissance $P_R\left(D_{\widehat{eNB_{Desserte}},UE}\right)$ du signal émis par la station de base de desserte plus un paramètre de Hystérésis plus un paramètre de offset de la station de base de desserte est inférieure à la valeur prédite de puissance $P_R\left(D_{\widehat{eNB_{Voisine}},UE}\right)$ du signal émis par la station de base voisine plus un paramètre d'offset de la station de base voisine pour des instants $t+\Delta t$ :

$$P_R\left(D_{\widehat{eNB_{Desserte}},UE}\right)(t+\Delta t) + \text{Hysteresis} + \text{Offset}_{eNB_{Desserte}} <$$
$$P_R\left(D_{\widehat{eNB_{Voisine}},UE}\right)(t+\Delta t) + \text{Offset}_{eNB_{Voisine}}.$$

**5.** Procédé selon la revendication 1 **caractérisé en ce que** l'équipement utilisateur empêche la transmission du rapport de mesure et interdit un changement de cellule si la valeur prédite de puissance du signal émis par la station de base de desserte moins un paramètre d'Hysteresis auquel on ajoute un paramètre d'offset de la station de base de desserte est supérieure à la valeur prédite de puissance du signal émis par la station de base voisine plus un paramètre d'offset de la station de base voisine pour des instants $t+\Delta t$ :

$$P_R\left(D_{\widehat{eNB_{Desserte}},UE}\right)(t+\Delta t) - \text{Hysteresis} + \text{Offset}_{eNB_{Desserte}} >$$
$$P_R\left(D_{\widehat{eNB_{Voisine}},UE}\right)(t+\Delta t) + \text{Offset}_{eNB_{Voisine}}.$$

**6.** Procédé selon la revendication 1 **caractérisé en ce que** l'équipement utilisateur transmet le rapport de mesure de puissance afin que la station de base de desserte déclenche un changement de cellule si la valeur mesurée de puissance $P_R(D_{eNB_{Desserte},UE})$ à l'instant t du signal émis par la station de base de desserte est inférieure à la valeur prédite de puissance $P_R\left(D_{\widehat{eNB_{Voisine}},UE}\right)$ du signal émis par la station de base voisine à l'instant $t+\Delta t$ :

$$P_R\left(D_{eNB_{Desserte},UE}\right)(t) < P_R\left(D_{\widehat{eNB_{Voisine}},UE}\right)(t+\Delta t).$$

**7.** Procédé selon la revendication 1 **caractérisé en ce que** l'équipement utilisateur ne transmet pas le rapport de mesure et interdit un changement de cellule si la valeur mesurée de puissance à l'instant t du signal émis par la station de base de desserte est supérieure à la valeur prédite de puissance du signal émis par la station de base voisine à l'instant $t+\Delta t$ :

$$P_R\left(D_{eNB_{Desserte},UE}\right)(t) > P_R\left(D_{\widehat{eNB_{Voisine}},UE}\right)(t+\Delta t).$$

**8.** Procédé selon la revendication 1 **caractérisé en ce que** l'équipement utilisateur transmet le rapport de mesure de puissance afin que la station de base de desserte déclenche un changement de cellule si la valeur prédite de puissance $\widehat{P_R\left(D_{eNB_{Desserte},UE}\right)}$ à l'instant *t+Δt* du signal émis par la station de base de desserte est inférieure à la valeur mesurée de puissance $P_R(D_{eNB_{Voisine},UE})$ du signal émis par la station de base voisine à l'instant *t* :

$$\widehat{P_R\left(D_{eNB_{Desserte},UE}\right)}(t + \Delta t) < P_R\left(D_{eNB_{Voisine},UE}\right)(t).$$

**9.** Procédé selon la revendication 1 **caractérisé en ce que** l'équipement utilisateur empêche la transmission du rapport de mesure et interdit un changement de cellule si la valeur prédite de puissance à l'instant *t+Δt* du signal émis par la station de base de desserte est supérieure à la valeur mesurée de puissance du signal émis par la station de base voisine à l'instant *t* :

$$\widehat{P_R\left(D_{eNB_{Desserte},UE}\right)}(t + \Delta t) > P_R\left(D_{eNB_{Voisine},UE}\right)(t).$$

**10.** Procédé selon la revendication 1 **caractérisé en ce que** l'équipement utilisateur empêche la transmission du rapport de mesure et interdit un changement de cellule si l'utilisateur mobile détermine, (31), que le temps entre 2 *min* ou 2 *max* consécutifs de puissance prédite pour la station de base de desserte est inférieur à une valeur seuil de 50 ms.

**11.** Procédé selon la revendication 1 **caractérisé en ce que** la valeur prédite de la puissance $\widehat{P_R(D)}$ est égale à $\frac{\lambda^2 P_T G_T G_R}{4\pi^2 l(D)^2} \widehat{sin^2}\left(\frac{\phi(D)}{2}\right)$ et l'utilisateur mobile transmet le rapport de mesure de puissance afin que la station de base de desserte déclenche la procédure de changement de cellule lorsque la condition suivante est réunie :

$$\frac{\lambda^2 P_T G_T G_R}{4\pi^2 l\left(D_{Desserte,UE}\right)^2} \widehat{sin^2}\left(\frac{\phi\left(D_{Desserte,UE}\right)}{2}\right)(t + \Delta t)$$
$$< \frac{\lambda^2 P_T G_T G_R}{4\pi^2 l\left(D_{Voisine,UE}\right)^2} \widehat{sin^2}\left(\frac{\phi\left(D_{Voisine,UE}\right)}{2}\right)(t + \Delta t)$$

avec

- D : la distance séparant les deux antennes
- $D_{Desserte,UE}$ : la distance séparant les deux antennes entre la station de de desserte et l'équipement utilisateur
- $D_{Voisine,UE}$ : la distance séparant les deux antennes entre la station de base voisine et l'utilisateur mobile
- $G_T$ et $G_R$ gains d'antenne
- $\lambda = \frac{C}{f}$ : la longueur d'onde de la liaison
- *f* : la fréquence de fonctionnement
- $C = 3 \cdot 10^8$m/s: la vitesse de la lumière
- $P_T$ : la puissance à l'émission
- *l = f(D)* la longueur du trajet direct.

**12.** Procédé selon la revendication 1 **caractérisé en ce que** l'équipement utilisateur ne transmet pas le rapport de mesure et interdit un changement de cellule lorsque la condition suivante est réunie :

$$\frac{\lambda^2 P_T G_T G_R}{4\pi^2 l\left(D_{Desserte,UE}\right)^2} \widehat{sin^2}\left(\frac{\phi(D_{Desserte,UE})}{2}\right)(t + \Delta t) >$$
$$\frac{\lambda^2 P_T G_T G_R}{4\pi^2 l\left(D_{Voisine,UE}\right)^2} \widehat{sin^2}\left(\frac{\phi(D_{Voisine,UE})}{2}\right)(t + \Delta t).$$

**13.** Procédé selon la revendication 1 **caractérisé en ce que** l'équipement utilisateur empêche la transmission du rapport de mesure et interdit un changement de cellule lorsque la condition suivante est vérifiée :

$$\frac{sin^2\left(\frac{\phi(\widehat{D_{Desserte,UE}})}{2}\right)}{l(D_{Desserte,UE})^2}(t+\Delta t) > \frac{sin^2\left(\frac{\phi(\widehat{D_{Voisine,UE}})}{2}\right)}{l(D_{Voisine,UE})^2}(t+\Delta t).$$

**14.** Procédé selon l'une des revendications précédentes **caractérisé en ce que** lorsque l'équipement utilisateur est en mode réception au moins une valeur de puissance est prédite par l'équipement utilisateur en fonction de la distance et de l'altitude $\widehat{P_R} = f(D, h_R)$ ou $\widehat{P_R} = f(D(t), h_R)$.

**15.** Procédé selon l'une des revendications précédentes **caractérisé en ce que** lorsque l'équipement utilisateur est en mode émission au moins une valeur de puissance est prédite par l'équipement utilisateur en fonction de la distance et de l'altitude $\widehat{P_R} = f(D, h_T)$ ou $\widehat{P_R} = f(D(t), h_T)$.

**16.** Procédé selon l'une des revendications précédentes **caractérisé en ce que** si la condition de sortie de la boucle de transmission du rapport est vérifiée, (32a), l'équipement utilisateur met en mémoire les paquets et informe les couches hautes de ne pas transmettre le rapport de mesure.

**17.** Procédé selon l'une des revendications précédentes **caractérisé en ce que** l'équipement utilisateur calcule la valeur temporelle $\Delta t$ à laquelle l'équipement utilisateur effectue une prédiction dans le futur $\Delta t$ en tenant compte de l'altitude de l'équipement utilisateur et de sa vitesse.

**18.** Procédé selon l'une des revendications 1 à 16 **caractérisé en ce que** l'équipement utilisateur calcule la valeur temporelle à laquelle l'équipement utilisateur effectue une prédiction $\Delta t$ en prenant en compte la pente d'une courbe représentant la mesure de puissance en fonction du temps ou de la position ou de l'équipement utilisateur.

**19.** Procédé selon l'une des revendications précédentes **caractérisé en ce que** le système de communication fonctionne avec la technologie 5G NR.

**Patentansprüche**

**1.** Verfahren, das von einer Benutzerausrüstung ausgeführt wird, um das Handover zwischen Zellen in einem Kommunikationssystem zu verwalten, das mindestens eine versorgende Basisstation, mindestens eine benachbarte Basisstation und einen oder mehrere mobile Benutzer umfasst, **dadurch gekennzeichnet, dass** es mindestens folgende Schritte umfasst:

   - für einen mobilen Benutzer, Messen der Stärke des empfangenen Signals,
   - wenn eine Eingangsbedingung einer Regelschleife verifiziert ist, Starten eines Timers t, wobei die Eingangsbedingung von der Messung der Leistung des empfangenen Signals abhängt,
   - Messen eines Leistungswerts des von der versorgenden Basisstation gesendeten Signals und mindestens eines Leistungswerts eines von einer benachbarten Basisstation gesendeten Signals,
   - wenn eine Ausgangsbedingung verifiziert ist (26a), Fortsetzen der Leistungsmessung, wobei die Ausgangsbedingung von einem Vergleich zwischen dem gemessenen Leistungswert des von der versorgenden Basisstation gesendeten Signals und dem mindestens einen gemessenen Leistungswert des von der benachbarten Basisstation gesendeten Signals abhängig ist,
   - wenn die Ausgangsbedingung einer Regelschleife nicht verifiziert ist (26b), Bestimmen (31) des Leistungswerts des Signals aus einem vorhergesagten Wert zu einem Zeitpunkt $t+\Delta t$, Vergleichen eines vorhergesagten Leistungswerts $P_R\left(D_{\widehat{eNB_{versorgende},UE}}\right)$ des von der versorgenden Basisstation gesendeten Signals und eines vorhergesagten Leistungswerts $P_R\left(D_{\widehat{eNB_{benachbarte},UE}}\right)$ des von einer benachbarten Basisstation gesendeten Signals, und der vorhergesagte Leistungswert wird als Funktion von mindestens der Phasendifferenz zwischen einem reflektierten Pfad des Signals und einem direkten Pfad des Signals $\phi = f(D)$ bestimmt, wobei D die Entfernung zwischen zwei Antennen ist,

- Überprüfen (32), ob eine Ausgangsbedingung der Berichtsübertragungsschleife

$$P_R\left(D_{eNB_{versorgende}},UE\right)(t + \Delta t) > P_R\left(D_{eNB_{benachbarte}},UE\right)(t + \Delta t)$$ verifiziert ist,

- wenn die Ausgangsbedingung der Berichtsübertragungsschleife verifiziert ist, (32a), Verbundenbleiben mit der versorgenden Basisstation, Verhindern einer Übertragung des Messberichts und Nichtübertragen des gemessenen Leistungswertes für das von der versorgenden Basisstation und/oder der benachbarten Basisstation gesendete Signal an die versorgende Basisstation,
- wenn die Ausgangsbedingung der Berichtsübertragungsschleife nicht verifiziert ist, (32b), Vergleichen (27) eines Zeitpunkts $t_{Mes}$ der Leistungsmessung mit einem Schwellenwert $t_{Schwellenwert}$, und
- Zurückkehren (27a) zur Leistungsmessung der Signale (25), wenn der Messzeitpunkt kleiner als der Schwellenwert $t_{Schwellenwert}$ ist,
- stattdessen (27b) Übertragen des Leistungsmessberichts mit dem gemessenen Leistungswert für das von der versorgenden Basisstation und/oder der benachbarten Basisstation gesendete Signal, (28), damit die versorgende Basisstation einen Zellenwechsel auslöst, (29).

2. Verfahren nach Anspruch 1, **dadurch gekennzeichnet, dass** die Benutzerausrüstung den Zeitpunkt $t_{Mes}+\Delta t$ der Leistungsvorhersage mit einem Schwellenwert $t_{Schwellenwert}$ für den Fall vergleicht, dass die Ausgangsbedingung der Schleife nicht verifiziert ist.

3. Verfahren nach Anspruch 1, **dadurch gekennzeichnet, dass** die Benutzerausrüstung den Leistungsmessbericht überträgt, damit die versorgende Basisstation einen Zellenwechsel auslöst, wenn der vorhergesagte Leistungswert

$$P_R\left(D_{eNB_{versorgende}},UE\right)$$ des von der versorgenden Basisstation gesendeten Signals niedriger ist als der vorhergesagte Leistungswert $P_R\left(D_{eNB_{benachbarte}},UE\right)$ des von der benachbarten Basisstation gesendeten Signals für Zeitpunkte $t+\Delta t$:

$$P_R\left(D_{eNB_{versorgende}},UE\right)(t + \Delta t) < P_R\left(D_{eNB_{benachbarte}},UE\right)(t + \Delta t).$$

4. Verfahren nach Anspruch 1, **dadurch gekennzeichnet, dass** die Benutzereinrichtung den Leistungsmessbericht überträgt, damit die versorgende Basisstation einen Zellenwechsel auslöst, wenn der vorhergesagte Leistungswert

$$P_R\left(D_{eNB_{versorgende}},UE\right)$$ des von der versorgenden Basisstation gesendeten Signals plus ein Hystereseparameter plus ein Offsetparameter der versorgenden Basisstation kleiner ist als der vorhergesagte Leistungswert

$$P_R\left(D_{eNB_{benachbarte}},UE\right)$$ des von der benachbarten Basisstation gesendeten Signals plus ein Offsetparameter der benachbarten Basisstation für Zeitpunkte $t+\Delta t$:

$$P_R\left(D_{eNB_{versorgende}},UE\right)(t + \Delta t) + \text{Hysterese} + \text{Offset}_{eNB_{versorgende}} <$$
$$P_R\left(D_{eNB_{benachbarte}},UE\right)(t + \Delta t) + \text{Offset}_{eNB_{benachbarte}}.$$

5. Verfahren nach Anspruch 1, **dadurch gekennzeichnet, dass** die Benutzerausrüstung die Übertragung des Messberichts verhindert und einen Zellenwechsel verbietet, wenn der vorhergesagte Wert der Leistung des von der versorgenden Basisstation gesendeten Signals minus einem Hystereseparameter, zu dem ein Offsetparameter der versorgenden Basisstation addiert wird, größer ist als der vorhergesagte Wert der Leistung des von der Nachbarbasisstation gesendeten Signals plus einem Offsetparameter der benachbarten Basisstation für Zeitpunkte $t+\Delta t$:

$$P_R\big(D_{eNB_{versorgende}},UE\big)(t+\Delta t) + \text{Hysterese} + \text{Offset}_{eNB_{versorgende}} >$$

$$P_R\big(D_{eNB_{benachbarte}},UE\big)(t+\Delta t) + \text{Offset}_{eNB_{benachbarte}}.$$

6. Verfahren nach Anspruch 1, **dadurch gekennzeichnet, dass** das Benutzergerät den Leistungsmessbericht überträgt, damit die versorgende Basisstation einen Zellenwechsel auslöst, wenn der gemessene Leistungswert $P_R(D_{eNBversorgende,UE})$ zum Zeitpunkt $t$ des von der versorgenden Basisstation gesendeten Signals kleiner ist als der vorhergesagte Leistungswert $P_R\big(D_{eNB_{benachbarte}},UE\big)$ des von der benachbarten Basisstation gesendeten Signals zum Zeitpunkt $t+\Delta t$:

$$P_R\big(D_{eNB_{versorgende}},UE\big)(t) < P_R\big(D_{eNB_{benachbarte}},UE\big)(t+\Delta t)\ .$$

7. Verfahren nach Anspruch 1, **dadurch gekennzeichnet, dass** die Benutzerausrüstung den Messbericht nicht überträgt und einen Zellenwechsel verbietet, wenn der gemessene Wert der Leistung zum Zeitpunkt $t$ des von der versorgenden Basisstation gesendeten Signals größer ist als der vorhergesagte Wert der Leistung des von der benachbarten Basisstation gesendeten Signals zum Zeitpunkt $t+\Delta t$:

$$P_R\big(D_{eNB_{versorgende}},UE\big)(t) > P_R\big(D_{eNB_{benachbarte}},UE\big)(t+\Delta t)\ .$$

8. Verfahren nach Anspruch 1, **dadurch gekennzeichnet, dass** das Benutzergerät den Leistungsmessbericht überträgt, damit die versorgende Basisstation einen Zellenwechsel auslöst, wenn der vorhergesagte Leistungswert $P_R\big(D_{eNB_{versorgende}},UE\big)$ zum Zeitpunkt $t+\Delta t$ des von der versorgenden Basisstation gesendeten Signals kleiner ist als der gemessene Leistungswert $P_R(D_{eNBbenachbarte,UE})$ des von der benachbarten Basisstation gesendeten Signals zum Zeitpunkt $t$:

$$P_R\big(D_{eNB_{versorgende}},UE\big)(t+\Delta t) < P_R\big(D_{eNB_{benachbarte}},UE\big)(t)\ .$$

9. Verfahren nach Anspruch 1, **dadurch gekennzeichnet, dass** die Benutzerausrüstung die Übertragung des Messberichts verhindert und einen Zellenwechsel verbietet, wenn der vorhergesagte Wert der Leistung zum Zeitpunkt $t+\Delta t$ des von der versorgenden Basisstation gesendeten Signals größer ist als der gemessene Wert der Leistung des von der benachbarten Basisstation gesendeten Signals zum Zeitpunkt t:

$$P_R\big(D_{eNB_{versorgende}},UE\big)(t+\Delta t) > P_R\big(D_{eNB_{benachbarte}},UE\big)(t)\ .$$

10. Verfahren nach Anspruch 1, **dadurch gekennzeichnet, dass** die Benutzerausrüstung die Übertragung des Messberichts verhindert und einen Zellenwechsel verbietet, wenn der mobile Benutzer feststellt (31), dass die Zeit zwischen 2 aufeinanderfolgenden *Min-* oder 2 *Max*-Werten der vorhergesagten Leistung für die versorgende Basisstation unter einem Schwellenwert von 50 ms liegt.

11. Verfahren nach Anspruch 1, **dadurch gekennzeichnet, dass** der vorhergesagte Wert der Leistung $P_R(D)$ gleich $\frac{\lambda^2 P_T G_T G_R}{4\pi^2 l(D)^2}\sin^2\left(\frac{\phi(D)}{2}\right)$ ist und der mobile Benutzer den Leistungsmessbericht überträgt, damit die versorgende Basisstation den Zellenwechselvorgang auslöst, wenn folgende Bedingung erfüllt ist:

$$\frac{\lambda^2 P_T G_T G_R}{4\pi^2 l(D_{versorgende,UE})^2} \sin^2\left(\frac{\widehat{\phi(D_{versorgende,UE})}}{2}\right)(t+\Delta t)$$

$$< \frac{\lambda^2 P_T G_T G_R}{4\pi^2 l(D_{benachbarte,UE})^2} \sin^2\left(\frac{\widehat{\phi(D_{benachbarte,UE})}}{2}\right)(t+\Delta t)$$

wobei

- $D$: der Abstand zwischen den beiden Antennen ist
- $D_{versorgende,UE}$: der Abstand zwischen den beiden Antennen zwischen der versorgenden Basisstation und dem Benutzergerät ist
- $D_{benachbarte,UE}$: der Abstand zwischen den beiden Antennen zwischen der benachbarten Basisstation und dem mobilen Benutzer ist
- $G_T$ und $G_R$ Antennenverstärkungen sind
- $\lambda = C/f$ : die Wellenlänge der Verbindung ist
- f: die Betriebsfrequenz ist
- $C = 3 \cdot 10^8$ m/s: die Lichtgeschwindigkeit ist
- $P_T$: die Sendeleistung ist
- $l = f(D)$ die Länge des direkten Pfades ist.

12. Verfahren nach Anspruch 1, **dadurch gekennzeichnet, dass** die Benutzerausrüstung den Messbericht nicht überträgt und einen Zellenwechsel verbietet, wenn die folgende Bedingung erfüllt ist:

$$\frac{\lambda^2 P_T G_T G_R}{4\pi^2 l(D_{versorgende,UE})^2} \sin^2\left(\frac{\widehat{\phi(D_{versorgende,UE})}}{2}\right)(t+\Delta t) >$$

$$\frac{\lambda^2 P_T G_T G_R}{4\pi^2 l(D_{benachbarte,UE})^2} \sin^2\left(\frac{\widehat{\phi(D_{benachbarte,UE})}}{2}\right)(t+\Delta t)$$

13. Verfahren nach Anspruch 1, **dadurch gekennzeichnet, dass** die Benutzerausrüstung die Übertragung des Messberichts verhindert und einen Zellenwechsel verbietet, wenn die folgende Bedingung verifiziert ist:

$$\frac{\sin^2\left(\frac{\widehat{\phi(D_{versorgende,UE})}}{2}\right)}{l(D_{versorgende,UE})^2}(t+\Delta t) > \frac{\sin^2\left(\frac{\widehat{\phi(D_{benachbarte,UE})}}{2}\right)}{l(D_{benachbarte,UE})^2}(t+\Delta t)$$

14. Verfahren nach einem der vorhergehenden Ansprüche, **dadurch gekennzeichnet, dass**, wenn sich die Benutzerausrüstung im Empfangsmodus befindet, mindestens ein Leistungswert von der Benutzerausrüstung in Abhängigkeit von der Entfernung und der Höhe $\widehat{P_R} = f(D, h_R)$ ou $\widehat{P_R} = f(D(t), h_R)$ vorhergesagt wird.

15. Verfahren nach einem der vorhergehenden Ansprüche, **dadurch gekennzeichnet, dass**, wenn sich die Benutzerausrüstung im Sendemodus befindet, mindestens ein Leistungswert von der Benutzerausrüstung in Abhängigkeit von der Entfernung und der Höhe $\widehat{P_R} = f(D, h_T)$ oder $\widehat{P_R} = f(D(t), h_T)$ vorhergesagt wird.

**16.** Verfahren nach einem der vorhergehenden Ansprüche, **dadurch gekennzeichnet, dass**, wenn die Ausgangsbedingung der Berichtsübertragungsschleife verifiziert ist (32a), die Benutzerausrüstung die Pakete speichert und die höheren Schichten darüber informiert, den Messbericht nicht zu übertragen.

**17.** Verfahren nach einem der vorhergehenden Ansprüche, **dadurch gekennzeichnet, dass** die Benutzerausrüstung den Zeitwert $\Delta t$ berechnet, bei dem die Benutzerausrüstung eine Vorhersage in die Zukunft $\Delta t$ unter Berücksichtigung der Höhe der Benutzerausrüstung und ihrer Geschwindigkeit macht.

**18.** Verfahren nach einem der Ansprüche 1 bis 16, **dadurch gekennzeichnet, dass** die Benutzerausrüstung den Zeitwert, bei dem die Benutzerausrüstung eine Vorhersage $\Delta t$ macht, unter Berücksichtigung der Steigung einer Kurve berechnet, welche die Leistungsmessung als Funktion der Zeit oder der Position oder der Benutzerausrüstung darstellt.

**19.** Verfahren nach einem der vorhergehenden Ansprüche, **dadurch gekennzeichnet, dass** das Kommunikationssystem mit der 5G NR-Technologie arbeitet.


**Claims**

**1.** A method, executed by an item of user equipment, for managing intercellular handover in a communication system comprising at least one serving base station, at least one neighbouring base station, and one or more mobile users, **characterised in that** it comprises at least the following steps:

- measuring, for a mobile user, the power of the received signal;
- starting a timer $t$ when an input condition of a control loop is checked, said input condition being a function of the measurement of the power of the received signal;
- measuring a power value of the signal transmitted by the serving base station and at least one power value of a signal transmitted by a neighbouring base station;
- continuing to measure the power when an output condition is checked (26a), said output condition being a function of a comparison between the measured power value of the signal transmitted by the serving base station and of the at least one measured power value of the signal transmitted by the neighbouring base station;
- determining (31), when the output condition of a control loop is not checked (26b), the power value of the signal from a predicted value at an instant $t+\Delta t$, comparing a predicted power value $P_R\left(\widetilde{D_{eNB_{Serving},UE}}\right)$ of the signal transmitted by the serving base station and a predicted power value $P_R\left(\widetilde{D_{eNB_{Neighbouring},UE}}\right)$
of the signal transmitted by a neighbouring base station, and the predicted power value is determined as a function of at least the phase difference between a reflected path of the signal and a direct path of the signal, $\phi = f(D)$, where $D$ is the distance separating two antennae;
- checking (32) whether an output condition of the transmission loop of the report

$$P_R\left(\widetilde{D_{eNB_{Serving},UE}}\right)(t+\Delta t) > P_R\left(\widetilde{D_{eNB_{Neighbouring},UE}}\right)(t+\Delta t) \text{ is checked;}$$

- if the output condition of the transmission loop of the report is checked (32a), remaining connected to the serving base station, preventing transmission of the measurement report and not transmitting the measured power value for the signal transmitted by the serving base station and/or by the neighbouring base station to the serving base station;
- if the output condition of the transmission loop of the report is not checked (32b), comparing (27) a power measurement time $t_{meas}$ with a threshold value $t_{threshold}$; and
- if the measurement time is less than the threshold value $t_{threshold}$, returning (27a) to the power measurement of the signals (25);
- otherwise, transmitting (27b) the power measurement report with the measured power value for the signal transmitted (28) by the serving base station and/or by the neighbouring base station, so that the serving base station triggers (29) a change of cell.

**2.** The method according to claim 1, **characterised in that** the item of user equipment compares the time $t_{meas}+\Delta t$ of predicting the power with a threshold value $t_{threshold}$ in the event that the output condition of the loop is not checked.

3. The method according to claim 1, **characterised in that** the item of user equipment transmits the power measurement report so that the serving base station triggers a change of cell if the predicted power value $P_R\left(D_{eNB_{Serving},UE}\right)$ of the signal transmitted by the serving base station is less than the predicted power value $P_R\left(D_{eNB_{Neighbouring},UE}\right)$ of the signal transmitted by the neighbouring base station for instants $t+\Delta t$:

$$P_R\left(D_{eNB_{Serving},UE}\right)(t+\Delta t) < P_R\left(D_{eNB_{Neighbouring},UE}\right)(t+\Delta t).$$

4. The method according to claim 1, **characterised in that** the item of user equipment transmits the power measurement report so that the serving base station triggers a change of cell if the predicted power value $P_R(D_{eNB_{Serving},UE})$ of the signal transmitted by the serving base station plus a hysteresis parameter plus an offset parameter of the serving base station is less than the predicted power value $P_R(D_{eNB_{Neighbouring},UE})$ of the signal transmitted by the neighbouring base station plus an offset parameter of the neighbouring base station for instants $t+\Delta t$:

$$P_R\left(D_{eNB_{Serving},UE}\right)(t+\Delta t) + \text{Hysteresis} + \text{Offset}_{eNB_{Serving}} <$$
$$P_R\left(D_{eNB_{Neighbouring},UE}\right)(t+\Delta t) + \text{Offset}_{eNB_{Neighbouring}}.$$

5. The method according to claim 1, **characterised in that** the item of user equipment prevents the transmission of the measurement report and prohibits a change of cell if the predicted power value of the signal transmitted by the serving base station minus a hysteresis parameter, to which an offset parameter of the serving base station is added, is greater than the predicted power value of the signal transmitted by the neighbouring base station plus an offset parameter of the neighbouring base station for instants $t+\Delta t$:

$$P_R\left(D_{eNB_{Serving},UE}\right)(t+\Delta t) - \text{Hysteresis} + \text{Offset}_{eNB_{Serving}} >$$
$$P_R\left(D_{eNB_{Neighbouring},UE}\right)(t+\Delta t) + \text{Offset}_{eNB_{Neighbouring}}.$$

6. The method according to claim 1, **characterised in that** the item of user equipment transmits the power measurement report so that the serving base station triggers a change of cell if the measured power value $P_R(D_{eNB_{Serving},UE})$, at the instant $t$, of the signal transmitted by the serving base station is less than the predicted power value $P_R\left(D_{eNB_{Neighbouring},UE}\right)$ of the signal transmitted by the neighbouring base station at the instant $t+\Delta t$:

$$P_R\left(D_{eNB_{Serving},UE}\right)(t) < P_R\left(D_{eNB_{Neighbouring},UE}\right)(t+\Delta t).$$

7. The method according to claim 1, **characterised in that** the item of user equipment does not transmit the measurement report and prohibits a change of cell if the measured power value, at the instant $t$, of the signal transmitted by the serving base station is greater than the predicted power value of the signal transmitted by the neighbouring base station at the instant $t+\Delta t$:

$$P_R\left(D_{eNB_{Serving},UE}\right)(t) > P_R\left(D_{eNB_{Neighbouring},UE}\right)(t+\Delta t).$$

8. The method according to claim 1, **characterised in that** the item of user equipment transmits the power measurement report so that the serving base station triggers a change of cell if the predicted power value $P_R(D_{eNB_{Serving,UE}})$, at the instant $t+\Delta t$, of the signal transmitted by the serving base station is less than the measured power value $P_R(D_{eNB_{eighbouringN,UE}})$ of the signal transmitted by the neighbouring base station at the instant t:

$$P_R\left(\widehat{D_{eNB_{Serving,UE}}}\right)(t+\Delta t) < P_R\left(D_{eNB_{Neighbouring,UE}}\right)(t).$$

9. The method according to claim 1, **characterised in that** the item of user equipment prevents the transmission of the measurement report and prohibits a change of cell if the predicted power value, at the instant $t+\Delta t$, of the signal transmitted by the serving base station is greater than the measured power value of the signal transmitted by the neighbouring base station at the instant $t$:

$$P_R\left(\widehat{D_{eNB_{Serving,UE}}}\right)(t+\Delta t) > P_R\left(D_{eNB_{Neighbouring,UE}}\right)(t).$$

10. The method according to claim 1, **characterised in that** the item of user equipment prevents the transmission of the measurement report and prohibits a change of cell if the mobile user determines (31) that the time between 2 consecutive *min* or *max* of predicted power for the serving base station is below a threshold value of 50 ms.

11. The method according to claim 1, **characterised in that** the predicted power value $\widehat{P_R(D)}$ is equal to $\frac{\lambda^2 P_T G_T G_R}{4\pi^2 l(D)^2} \widehat{\sin^2}\left(\frac{\phi(D)}{2}\right)$ and the mobile user transmits the power measurement report so that the serving base station triggers the change of cell procedure when the following condition is met:

$$\frac{\lambda^2 P_T G_T G_R}{4\pi^2 l\left(D_{Serving,UE}\right)^2} \widehat{\sin^2}\left(\frac{\phi\left(D_{Serving,UE}\right)}{2}\right)(t+\Delta t)$$

$$< \frac{\lambda^2 P_T G_T G_R}{4\pi^2 l(D_{Neighbouring,UE})^2} \widehat{\sin^2}\left(\frac{\phi(D_{Neighbouring,UE})}{2}\right)(t+\Delta t)$$

with

- *D*: being the distance separating the two antennae;
- $D_{Serving,UE}$: being the distance separating the two antennae between the serving base station and the item of user equipment;
- $D_{Neighbouring,UE}$: being the distance separating the two antennae between the neighbouring base station and the mobile user;
- $G_T$ and $G_R$ being antenna gains;
- $\lambda = {}^C\!/_f$ : being the wavelength of the link;
- *f*: being the operating frequency;
- $C = 3 \cdot 10^8 m/s$: being the speed of light;
- $P_T$: being the transmission power;
- $l = f(D)$: being the length of the direct path.

12. The method according to claim 1, **characterised in that** the item of user equipment does not transmit the measurement report and prohibits a change of cell when the following condition is met:

$$\frac{\lambda^2 P_T G_T G_R}{4\pi^2 l(D_{Serving,UE})^2} sin^2\left(\frac{\widehat{\phi(D_{Serving,UE})}}{2}\right)(t+\Delta t) >$$

$$\frac{\lambda^2 P_T G_T G_R}{4\pi^2 l(D_{Neighbouring,UE})^2} sin^2\left(\frac{\widehat{\phi(D_{Neighbouring,UE})}}{2}\right)(t+\Delta t).$$

**13.** The method according to claim 1, **characterised in that** the item of user equipment prevents the transmission of the measurement report and prohibits a change of cell when the following condition is checked:

$$\frac{sin^2\left(\frac{\widehat{\phi(D_{Servinge,UE})}}{2}\right)}{l(D_{Serving,UE})^2}(t+\Delta t) > \frac{sin^2\left(\frac{\widehat{\phi(D_{Neighbouring,UE})}}{2}\right)}{l(D_{Neighbouring,UE})^2}(t+\Delta t).$$

**14.** The method according to any of the preceding claims, **characterised in that** when the item of user equipment is in reception mode at least one power value is predicted by the item of user equipment as a function of the distance and of the altitude $\widehat{P_R} = f(D, h_R)$ or $\widehat{P_R} = f(D(t), h_R)$ .

**15.** The method according to any of the preceding claims, **characterised in that** when the item of user equipment is in transmission mode at least one power value is predicted by the item of user equipment as a function of the distance and of the altitude $\widehat{P_R} = f(D, h_T)$ or $\widehat{P_R} = f(D(t), h_T)$ .

**16.** The method according to any of the preceding claims, **characterised in that** if the output condition of the transmission loop of the report is checked (32a), the item of user equipment stores the packets and informs the upper layers not to transmit the measurement report.

**17.** The method according to any of the preceding claims, **characterised in that** the item of user equipment computes the time value $\Delta t$ at which the item of user equipment makes a prediction in the future $\Delta t$ taking into account the altitude of the item of user equipment and its speed.

**18.** The method according to any of claims 1 to 16, **characterised in that** the item of user equipment computes the time value at which the item of user equipment makes a prediction $\Delta t$ taking into account the slope of a curve representing the power measurement as a function of time or of the position or of the item of user equipment.

**19.** The method according to any of the preceding claims, **characterised in that** the communication system operates with 5G NR technology.

UE

12

10 ⟷ 11

13

UE

Cellule de desserte

Station de base

Station de desserte

2

1

Cellule de base

2

15 ⟷ 16

17

FIG.1

Art antérieur

FIG.2

FIG.3

FIG.4

FIG.5

**FIG.6**

**FIG.7**

## RÉFÉRENCES CITÉES DANS LA DESCRIPTION

**Documents brevets cités dans la description**

- EP 3352506 A1

**Littérature non-brevet citée dans la description**

- **AHAMED MD MARUF et al.** Path loss slope based cell selection and handover in heterogeneous networks. *2015 IEEE International conférence on electron/information technology (EIT)*